(19) Europäisches Patentamt / European Patent Office / Office européen des brevets

(11) **EP 4 382 236 A1**

(12) **EUROPEAN PATENT APPLICATION**
published in accordance with Art. 153(4) EPC

(43) Date of publication:
**12.06.2024 Bulletin 2024/24**

(21) Application number: **22869713.2**

(22) Date of filing: **02.08.2022**

(51) International Patent Classification (IPC):
**B23K 9/12** $^{(2006.01)}$    **B23K 9/09** $^{(2006.01)}$
**B23K 9/173** $^{(2006.01)}$

(52) Cooperative Patent Classification (CPC):
**B23K 9/09; B23K 9/12; B23K 9/173**

(86) International application number:
**PCT/JP2022/029717**

(87) International publication number:
**WO 2023/042565 (23.03.2023 Gazette 2023/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.09.2021 JP 2021152554**

(71) Applicant: **KABUSHIKI KAISHA KOBE SEIKO SHO (KOBE STEEL, LTD.)**
**Hyogo 651-8585 (JP)**

(72) Inventors:
• **YAMAZAKI, Kei**
  **Fujisawa-shi, Kanagawa 251-8551 (JP)**
• **KITAMURA, Yoshiaki**
  **Fujisawa-shi, Kanagawa 251-8551 (JP)**

(74) Representative: **Müller-Boré & Partner**
**Patentanwälte PartG mbB**
**Friedenheimer Brücke 21**
**80639 München (DE)**

(54) **WELDING CONTROL METHOD, WELDING CONTROL DEVICE, WELDING POWER SUPPLY, WELDING SYSTEM, PROGRAM, WELDING METHOD, AND ADDITIVE MANUFACTURING METHOD**

(57)    A stable penetration depth and a reduction in spatter can be simultaneously achieved in an arc welding method where forward feeding and reverse feeding of a tip of a wire are periodically repeated. A total period of the forward feeding period ($T_P$) and the reverse feeding period ($T_N$) is set as one cycle and a frequency f of one cycle is set as 50 to 150 Hz, a relationship between an average current ($I_{P-AVE}$) of the current non-suppression period ($T_{IP}$) and an average current ($I_{B-AVE}$) of the current suppression period ($T_{IB}$) is set as $0.65 \leq I_{P-AVE} / (I_{P-AVE} + I_{B-AVE}) \leq 0.90$, a wave height (Wh) that is a variation width of the tip position of the welding wire between the uppermost end and the lowermost end is set as 14 to 35% with respect to a distance between the tip of the welding wire and the base metal, a relationship between any current non-suppression period ($T_{IP}$) and the current suppression period ($T_{IB}$) immediately after the current non-suppression period ($T_{IP}$) is set as $0.30 \leq T_{IB} / (T_{IP} + T_{IB}) \leq 0.60$, a relationship between the forward feeding period ($T_P$) and the reverse feeding period ($T_N$) is set as $0.40 \leq T_N / (T_P + T_N) \leq 0.70$, a relationship between the current non-suppression period ($T_{IP}$), the current suppression period ($T_{IB}$), the forward feeding period ($T_P$), and the reverse feeding period ($T_N$) is set as $\{T_N / (T_P + T_N)\} > \{T_{IB} / (T_{IP} + T_{IB})\}$, and the current non-suppression period ($T_{IP}$) is controlled to account for 2/3 or more of the forward feeding period ($T_P$).

*FIG. 9A*

**Description**

TECHNICAL FIELD

The present invention relates to a welding control method, a welding control device, a welding power supply, a welding system, a program, a welding method, and an additive manufacturing method in an arc welding method where the feeding of a welding wire periodically and repeatedly switches between forward feeding and reverse feeding.

BACKGROUND ART

In welding of a thick plate mainly used in the industry of a steel frame, a construction machine, and the like, it is required to ensure a certain penetration depth. In welding of a galvanized steel plate that is applied to the industry of automobiles and the like, it is required to prevent porosity defects. The ensuring of the penetration depth and the prevention of the porosity defects can be solved by increasing thermal energy of arc. Therefore, in the related art, gas-shielded metal arc welding (GMAW) that adopts a countermeasure of increasing the current density of arc using shielding gas such as carbon dioxide gas having a high potential gradient or increasing the welding current itself has been performed. However, the application of the shielding gas having a high potential gradient or the application of a high welding current causes an increase in spatter, and there is a problem of a decrease in welding workability mainly caused by spatter.

Regarding the above problem, to suppress the generation of spatter even when a high current flows through a welding wire (hereinafter, also referred to as "wire") as a consumable electrode while arc welding is performed by periodically and repeatedly switching the feeding of the wire between forward feeding and reverse feeding, Patent Literature 1 discloses that a reduction in spatter can be implemented even in a high current range where welding can be performed with a high heat input and high efficiency, that is, in a current range having a transfer mode other than short circuiting transfer by using control means configured to change the welding current depending on a tip position of the wire that periodically varies when the tip of the wire is fed toward the base metal while periodically switching between a forward feeding period and a reverse feeding period.

CITATION LIST

PATENT LITERATURE

PATENT LITERATURE 1: JP2020-49506A

SUMMARY OF INVENTION

TECHNICAL PROBLEM

As described above, Patent Literature 1 discloses a method capable of implementing a reduction in spatter in a high current range where welding can be performed with a high heat input and high efficiency, but does not particularly mention the penetration depth. That is, Patent Literature 1 does not make any mention of the ensuring of a stable penetration depth or the effect of preventing the porosity defects.

In the arc welding method disclosed in Patent Literature 1 where forward feeding and reverse feeding are periodically repeated, unlike the short circuiting transfer method of the related art, a control is performed such that short circuit does not occur. However, depending on a difference in workpiece conditions or in construction conditions such as welding position or depending on disturbance during welding, short circuit occurs during welding control or a release timing of a droplet deviates such that there is a concern that a stable penetration depth cannot be obtained or a concern that the amount of spatter generated may increase. Therefore, a higher-accuracy welding control capable of simultaneously achieving the stable penetration depth and the spatter reduction effect in any welding environment is required.

The present invention has been made considering the above-described problems, and an object thereof is to provide a welding control method, a welding control device, a welding power supply, a welding system, a program, a welding method, and an additive manufacturing method, in which a stable penetration depth and a reduction in spatter can be simultaneously achieved in an arc welding method where the feeding of a welding wire periodically and repeatedly switches between forward feeding and reverse feeding.

SOLUTION TO PROBLEM

Accordingly, the above-described object of the present invention is achieved by the following configuration of [1] relating to the welding control method.

[1] A welding control method in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$, in which
a total period of the forward feeding period $T_P$ and the reverse feeding period $T_N$ is set as one cycle and a frequency f of one cycle is set as 50 to 150 Hz,
a relationship between an average current $I_{P-AVE}$ of the current non-suppression period $T_{IP}$ and an average current $I_{B-AVE}$ of the current suppression period $T_{IB}$ is set as $0.65 \leq I_{P-AVE} / (I_{P-AVE} + I_{B-AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
the current non-suppression period $T_{IP}$ is controlled to account for 2/3 or more of the forward feeding period $T_P$.

The above-described object of the present invention is achieved by the following configuration of [2] relating to the welding control device.
[2] A welding control device in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$, in which
a total period of the forward feeding period $T_P$ and the reverse feeding period $T_N$ is set as one cycle and a frequency f of one cycle is set as 50 to 150 Hz,
a relationship between an average current $I_{P-AVE}$ of the current non-suppression period $T_{IP}$ and an average current $I_{B-AVE}$ of the current suppression period $T_{IB}$ is set as $0.65 \leq I_{P-AVE} / (I_{P-AVE} + I_{B-AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
a function of controlling the current non-suppression period $T_{IP}$ to account for 2/3 or more of the forward feeding period $T_P$ is provided.

The above-described object of the present invention is achieved by the following configuration of [3] relating to the welding power supply.

[3] A welding power supply including: the welding control device according to [2].

The above-described object of the present invention is achieved by the following configuration of [4] relating to the welding system.

[4] A welding system including the welding control device according to [2] or the welding power supply according to [3].

The above-described object of the present invention is achieved by the following configuration of [5] relating to the program.

[5] A program causing a computer of a welding system to execute a function,

the welding system including at least a welding control device in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$,

the welding control device having a configuration in which

a total period of the forward feeding period $T_P$ and the reverse feeding period $T_N$ is set as one cycle and a frequency f of one cycle is set as 50 to 150 Hz,

a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the function is a function of controlling the current non-suppression period $T_{IP}$ to account for 2/3 or more of the forward feeding period $T_P$.

The above-described object of the present invention is achieved by the following configuration of [6] relating to the welding method.

[6] A welding method including performing gas-shielded metal arc welding while performing a welding control in which, in the gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$, in which

a total period of the forward feeding period $T_P$ and the reverse feeding period $T_N$ is set as one cycle and a frequency f of one cycle is set as 50 to 150 Hz,

a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the current non-suppression period $T_{IP}$ is controlled to account for 2/3 or more of the forward feeding period $T_P$.

The above-described object of the present invention is achieved by the following configuration of [7] relating to the additive manufacturing method.

[7] An additive manufacturing method including performing additive manufacturing to which gas-shielded metal arc welding is applied while performing a welding control in which, in the gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$, in which

a total period of the forward feeding period $T_P$ and the reverse feeding period $T_N$ is set as one cycle and a frequency f of one cycle is set as 50 to 150 Hz,

a relationship between an average current $I_{P\text{-AVE}}$ of the current non-suppression period $T_{IP}$ and an average current $I_{B\text{-AVE}}$ of the current suppression period $T_{IB}$ is set as $0.65 \leq I_{P\text{-AVE}} / (I_{P\text{-AVE}} + I_{B\text{-AVE}}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the current non-suppression period $T_{IP}$ is controlled to account for 2/3 or more of the forward feeding period $T_P$.

ADVANTAGEOUS EFFECTS OF INVENTION

With the welding control method, the welding control device, the welding power supply, the welding system, the program, the welding method, and the additive manufacturing method according to the present invention, a stable penetration depth and a reduction in spatter can be simultaneously achieved in an arc welding method where the feeding of a welding wire periodically and repeatedly switches between forward feeding and reverse feeding.

BRIEF DESCRIPTION OF DRAWINGS

Fig. 1 is a schematic diagram illustrating a configuration example of a welding system according to an embodiment.
Fig. 2 is a block diagram illustrating a schematic configuration of a power supply control unit in a welding power supply.
Fig. 3 is a waveform chart illustrating a temporal change of a wire feed speed Fw.
Fig. 4 is a waveform chart illustrating a temporal change of a tip position of a welding wire.
Fig. 5 is a flowchart illustrating an example of a basic control of a welding current in the present embodiment.
Fig. 6 is a diagram illustrating a control example of a current setting signal Ir for designating a current value of the welding current.
Fig. 7 is a sequence of photographs by a high-speed camera illustrating an example of a progress state of welding in a short circuiting transfer method in the related art, and is a sequence of photographs in substitution for a drawing taken every elapsed time for Test No. 24 as Reference Example described below.
Fig. 8 is a sequence of photographs by a high-speed camera illustrating an example of a progress state of welding in the present embodiment, and is a sequence of photographs in substitution for a drawing taken every elapsed time for Test No. 8 as Example described below.

Fig. 9A is a diagram illustrating a relationship between a wire feed speed Fw, a wire tip position, and a welding current set value for describing setting of a terminal end position of a welding current set value $I_{P1}$ and a terminal end position of a welding current set value $I_{P2}$.

Fig. 9B is a diagram illustrating a relationship between a wire feed speed Fw, a wire tip position, and a welding current set value for describing setting of a terminal end position of a current suppression period $T_{IB}$.

Fig. 10 is a diagram illustrating a relationship between a short circuit frequency and a penetration depth.

DESCRIPTION OF EMBODIMENTS

Hereinafter, an embodiment of a welding control method, a welding control device, a welding power supply, a welding system, a program, a welding method, and an additive manufacturing method according to the present invention will be described in detail based on the drawings.

The present embodiment is an example where a welding robot is used, and the welding control method according to the present invention is not limited to a configuration of the present embodiment. For example, the welding control method according to the present invention may be applied to an automatic welding device using a carriage, and the welding control method according to the present invention may be applied to a portable small welding robot. In the present embodiment, a gas-shielded metal arc welding method using a pulse waveform is used.

In the present embodiment, a gas-shielded metal arc welding method to which the welding control method according to the present invention is applied will be described. However, the welding control method according to the present invention is also applicable to an additive manufacturing method to which gas-shielded metal arc welding is applied.

A method of measuring a welding behavior according to the present invention is useful not only for welding but also for an additive manufacturing technique using GMAW, specifically, for wire and arc additive manufacturing (WAAM). The term additive manufacturing may be used as the term additive manufacturing or rapid prototyping in a broad sense. In the present invention, the term additive manufacturing is collectively used. When the method according to the present invention is used for the additive manufacturing technique, "welding" is replaced with "deposition", "additive manufacturing", or the like. For example, "welding behavior" is used when the present invention is used for welding but can be replaced with "deposition behavior" when the present invention is used for additive manufacturing. "Welding system" is used when the present invention is used for welding but can be replaced with "additive manufacturing system" when the present invention is used for additive manufacturing.

<Summary of Welding System>

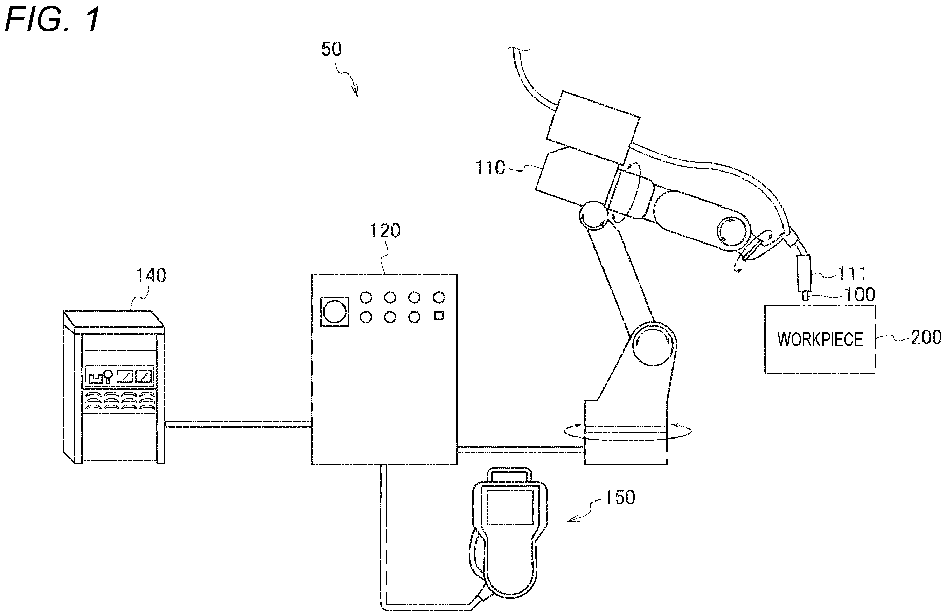

Fig. 1 is a schematic diagram illustrating a configuration example of the welding system according to the present embodiment. A welding system 50 includes a welding robot 110, a welding control device 120, a feeding device (not illustrated) that feeds a welding wire 100, a welding power supply 140, and a controller 150.

The welding power supply 140 is connected to the welding robot 110 through a positive power cable (not illustrated) such that the welding wire 100 as a consumable electrode can be energized, and is connected to a workpiece (hereinafter, also referred to as "base metal") 200 through a negative power cable (not illustrated). The connection is established when welding is performed with reverse polarity. When welding is performed with straight polarity, the polarity of the welding power supply 140 is reversed.

The welding power supply 140 and the feeding device for feeding the welding wire 100 are connected to each other through a signal line such that a feed speed of the welding wire can be controlled.

The welding robot 110 includes a welding torch 111 as an end effector. The welding torch 111 includes an energization mechanism for energizing the welding wire 100, that is, a welding tip. The welding wire 100 generates an arc from a tip by energization from the welding tip and welds the workpiece 200 to be welded using heat of the arc. In general, the welding tip is also called a contact tip.

The welding torch 111 includes a shielding gas nozzle as a mechanism for ejecting shielding gas. The shielding gas only needs to have a gas composition adopting a globular transfer mode according to characteristics of control used in the present embodiment. Specifically, it is preferable to include at least one gas among carbon dioxide gas, nitrogen gas, hydrogen gas, and oxygen gas that have a high potential gradient. From the viewpoint of versatility, it is more preferable to use carbon dioxide gas alone. When a mixed gas including argon gas (hereinafter, also referred to as "Ar gas") is used, a system including at least one gas among carbon dioxide gas, nitrogen gas, hydrogen gas, and oxygen gas and where a total content of mixed gas other than Ar gas is 5 to 50 vol% is more preferable. The shielding gas is supplied from a shielding gas supply device (not illustrated).

The welding wire 100 used in the present embodiment is not particularly limited. For example, any of a solid wire not containing flux or a flux cored wire containing flux may be used. A material of the welding wire 100 is not particularly limited. For example, the material may be mild steel, may be stainless steel, aluminum, or titanium, or may be a wire surface plated with Cu or the like. A diameter of the welding wire 100 is not particularly limited. In the present embodiment, it is preferable that the upper limit of the diameter is 1.6 mm and the lower limit of the diameter is 0.8 mm.

A specific configuration of the workpiece 200 in the present embodiment is not particularly limited, and construction conditions such as a joint shape, a welding position, or a groove shape are also not particularly limited.

The welding control device 120 mainly controls an operation of the welding robot 110. The welding control device 120 stores teaching data for determining an operation pattern, a welding start position, a welding end position, welding conditions, a weaving operation, and the like of the welding robot 110 in advance, teaches the welding robot 110 the teaching data to control the operation of the welding robot 110. The welding control device 120 gives welding conditions such as a welding current, a welding voltage, and a feed speed during welding work to the welding power supply 140 according to the teaching data.

As illustrated in Fig. 1, in the welding system 50 according to the present embodiment, the welding control device 120 is configured to be independent of the welding power supply 140, but the welding power supply 140 may be configured to include the welding control device 120.

The controller 150 is connected to the welding control device 120, executes generation or display of a program for operating the welding robot 110, input of the teaching data, and the like, and gives the data to the welding control device 120. The controller 150 also has a function of executing a manual operation of the welding robot 110. Whether the connection between the controller 150 and the welding control device 120 is wired or wireless is not particularly limited.

The welding power supply 140 supplies electric power to the welding wire 100 and the workpiece 200 to generate an arc between the welding wire 100 and the workpiece 200 in response to an instruction from the welding control device 120. The welding power supply 140 outputs a signal for controlling a speed at which the welding wire 100 is fed to the feeding device (not illustrated) in response to an instruction from the welding control device 120.

functional Configuration of Welding Power Supply>

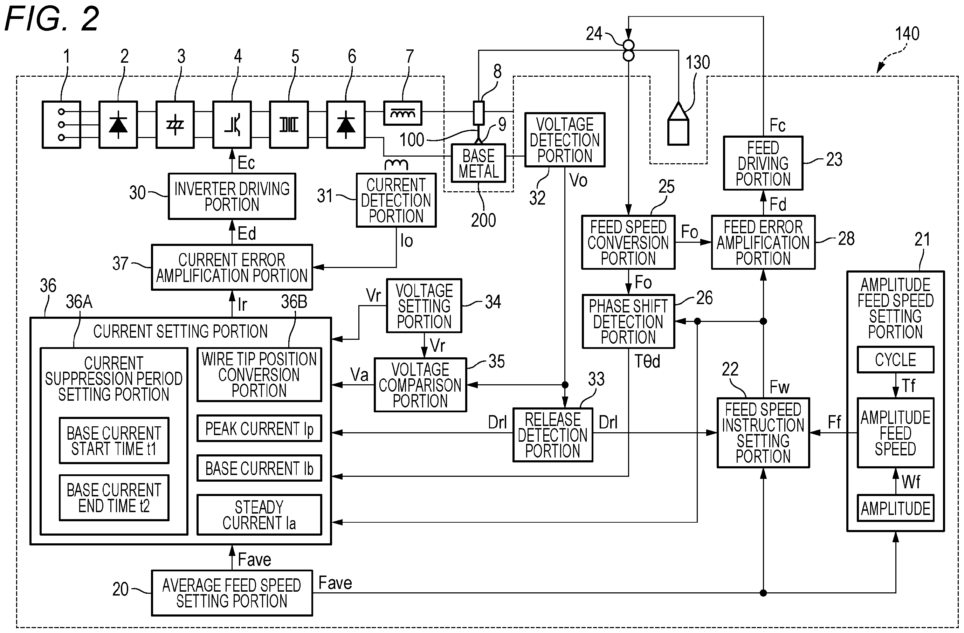

Next, a functional configuration of the welding power supply 140 according to the present embodiment will be described in detail with reference to Fig. 2. Fig. 2 is a block diagram illustrating a schematic configuration of a power supply control unit in the welding power supply 140.

A control system portion of the welding power supply 140 is executed, for example, by the welding control device 120 or a computer (not illustrated) executing a program.

The control system portion of the welding power supply 140 includes a current setting portion 36. The current setting portion 36 in the present embodiment has not only a function of setting various current values for defining the welding current flowing through the welding wire 100, but also a function of allowing a current suppression period setting portion 36A to set a start time and an end time of a period where the current value of the welding current is suppressed and a function of allowing a wire tip position conversion portion 36B to request information regarding a tip position of the welding wire 100.

Various condition settings of a current non-suppression period $T_{IP}$ described below, for example, a current setting point of a rising period $T_U$ or a falling period $T_D$ are included in the function of setting various current values for defining the welding current flowing through the welding wire 100 by the current setting portion 36.

In the present embodiment, the welding current shows a pulse waveform that repeatedly switches between the current non-suppression period $T_{IP}$ and a current suppression period $T_{IB}$. The current setting portion 36 sets a set current value Ip of the current non-suppression period $T_{IP}$ (hereinafter, also referred to as "peak current Ip") and a set current value Ib of the current suppression period $T_{IB}$ (hereinafter, also referred to as "base current Ib"). A steady current Ia for a reset control at a droplet release timing described below may be set. In the present embodiment, the welding current is basically controlled by two values of the peak current Ip and the base current Ib. Therefore, a time t1 at which the period where the suppression of the current value starts represents a time at which the base current Ib starts, that is, a base current start time. Therefore, a time t2 at which the period where the suppression of the current value ends represents a time at which the base current Ib ends, that is, a base current end time. A time at which the current non-suppression period $T_{IP}$ starts represents a peak current start time, and a time at which the current non-suppression period $T_{IP}$ ends represents a peak current end time.

A power supply main circuit of the welding power supply 140 is configured by a three-phase alternating current power supply (hereinafter, also referred to as "alternating current power supply") 1, a primary rectifier 2, a smoothing capacitor 3, a switching element 4, a transformer 5, a secondary rectifier 6, and a reactor 7.

An alternating current power input from the alternating current power supply 1 is full-wave rectified by the primary rectifier 2, is smoothened by the smoothing capacitor 3, and is converted into a direct current power. Next, the direct current power is converted into a high frequency alternating current power by an inverter control of the switching element 4, and subsequently is converted into a secondary power through the transformer 5. The alternating current output of the transformer 5 is full-wave rectified by the secondary rectifier 6 and is smoothened by the reactor 7. The output current of the reactor 7 is given to a welding tip 8 as an output from the power supply main circuit such that the welding wire 100 as a consumable electrode is energized.

The welding wire 100 is fed by a feeding motor 24 and a feeding device 130 and generates an arc 9 with a base metal 200. In the present embodiment, the feeding motor 24 feeds the welding wire 100 to periodically switch between a forward feeding period $T_P$ where the tip of the welding wire 100 moves toward the base metal 200 and a reverse feeding period $T_N$ where the tip of the welding wire 100 moves in a direction opposite to a direction in which the base metal 200 is positioned.

Typically, "the tip of the welding wire" described herein refers to a wire tip when the presence of a falling droplet in the wire tip is ignored. That is, it is assumed that the wire melted by the arc is immediately transferred to the base metal. As described above, the position is determined depending on a speed difference between a wire feed speed and a melting speed of the wire.

The feeding of the welding wire 100 by the feeding motor 24 is controlled based on a control signal Fc from a feed driving portion 23. An average value of the feed speed is substantially the same as the melting speed. In the present embodiment, the feeding of the welding wire 100 by the feeding motor 24 is also controlled by the welding power supply 140.

A voltage setting signal Vr that is a target value of a voltage to be applied between the welding tip 8 and the base metal 200 is given from a voltage setting portion 34 to the current setting portion 36. The voltage setting signal Vr described herein is also given to a voltage comparison portion 35 and is compared to a voltage detection signal Vo detected by a voltage detection portion 32. The voltage detection signal Vo is a measured value. The voltage comparison portion 35 amplifies a difference between the voltage setting signal Vr and the voltage detection signal Vo, and outputs the amplified difference to the current setting portion 36 as a voltage error amplified signal Va. The current setting portion 36 controls the welding current such that a length of the arc 9 (hereinafter, also referred to as "arc length") is constant. That is, the current setting portion 36 executes a constant voltage control through the control of the welding current.

The current setting portion 36 resets a value of the peak current Ip, a value of the base current Ib, a period where the peak current Ip is given, or sizes of the value of the peak current Ip and the value of the base current Ib based on the voltage setting signal Vr and the voltage error amplified signal Va, and outputs the current setting signal Ir corresponding to the size of the reset period or value to a current error amplification portion 37.

The current error amplification portion 37 amplifies a difference between the current setting signal Ir given as a target value and a current detection signal Io detected by a current detection portion 31, and outputs the amplified difference to an inverter driving portion 30 as a current error amplified signal Ed. The inverter driving portion 30 corrects a driving signal Ec of the switching element 4 based on the current error amplified signal Ed.

A release detection signal DrI that is a signal for detecting the release of a droplet from the tip of the welding wire 100 is also input to the current setting portion 36. The release detection signal DrI is output from a release detection portion 33. The release detection portion 33 monitors a change in the voltage detection signal Vo output from the voltage detection portion 32, and detects the release of a droplet from the welding wire 100 based on the change. The release detection portion 33 is an example of detection means.

The release detection portion 33 described herein detects the release of a droplet, for example, by comparing a value obtained by differentiation or second order differentiation of the voltage detection signal Vo to a threshold for detection. The threshold for detection is stored in advance in a storage portion (not illustrated). The release detection portion 33 generates the release detection signal DrI based on a change in resistance value calculated based on the voltage detection signal Vo and the current detection signal Io as measured values.

An average feed speed Fave of the welding wire 100 to be fed is also given to the current setting portion 36. The average feed speed Fave is output based on teaching data that is stored in the storage portion (not illustrated) by an average feed speed setting portion 20. That is, the average feed speed Fave may be replaced with a set value (instruction value) of the feed speed.

Based on the given average feed speed Fave, the current setting portion 36 determines values of the peak current Ip, the base current Ib, the time t1 at which the base current Ib starts, and the time t2 at which the base current Ib ends.

In the present embodiment, as illustrated in Fig. 2, the average feed speed Fave is input to the current setting portion 36. However, regarding the signal to be input to the current setting portion 36, a value relating to the average feed speed Fave may be used as a set value instead of the average feed speed Fave. For example, when the average feed speed Fave and a database of an average current value at which optimum welding can be performed at the average feed speed Fave are stored in the storage portion (not illustrated), the average current value as a set value may be used instead of the average feed speed Fave.

The average feed speed Fave is also given to an amplitude feed speed setting portion 21 and a feed speed instruction setting portion 22. Here, the amplitude feed speed setting portion 21 determines values of an amplitude Wf and a cycle Tf based on the input average feed speed Fave. The amplitude feeding refers to a feeding method in which a forward feeding period that is a period where the feed speed is higher than the average feed speed Fave and a reverse feeding period that is a period where the feed speed is lower than the average feed speed Fave alternately appears. The period where the feed speed is lower than the average feed speed Fave represents being lower than the average feed speed Fave and includes a negative feed speed, that is, a speed at which the wire tip moves in a direction opposite to a position where the base metal 200 is positioned. The amplitude Wf gives a variation width to the average feed speed Fave, and the cycle Tf gives a time of an amplitude change that is a repeating unit. The amplitude feed speed setting portion 21 generates an amplitude feed speed Ff corresponding to the determined values of the amplitude Wf and the cycle Tf or a frequency f, and outputs the generated amplitude feed speed Ff.

The feed speed instruction setting portion 22 outputs a feed speed instruction signal Fw based on the amplitude feed speed Ff and the average feed speed Fave. In the present embodiment, the feed speed instruction signal Fw is represented by the following expression.

$$Fw = Ff + Fave \qquad \ldots \qquad \text{Expression (1)}$$

Note that the feed speed instruction signal Fw represented by Expression (1) is limited to a case where the release of a droplet from the tip of the welding wire 100 is detected within an assumed period. When the release of a droplet is not detected within the assumed period, the feed speed instruction setting portion 22 may switch the feed speed instruction signal Fw to a feed control at a given speed. For example, the feed speed instruction setting portion 22 switches the feed speed instruction signal Fw to feeding at the average feed speed Fave. The switching from the feeding at the average feed speed Fave to the feed control represented by Expression (1) is determined depending on a timing at which the release of a droplet is detected. A specific control example will be described below.

The feed speed instruction setting portion 22 detects a phase of the amplitude feeding where the release occurs based on the release detection signal DrI given from the release detection portion 33.

The feed speed instruction signal Fw is output to a phase shift detection portion 26, a feed error amplification portion 28, and the current setting portion 36.

The feed error amplification portion 28 amplifies a difference between the feed speed instruction signal Fw as a target speed and a feed speed detection signal Fo obtained by measuring the feed speed of the welding wire 100 by the feeding motor 24, and outputs a speed error amplified signal Fd obtained by correcting the error difference to the feed driving portion 23.

The feed driving portion 23 generates the control signal Fc based on the speed error amplified signal Fd, and gives the generated control signal Fc to the feeding motor 24. A feed speed conversion portion 25 described herein converts a rotating speed or the like of the feeding motor 24 into the feed speed detection signal Fo of the welding wire 100.

The phase shift detection portion 26 according to the present embodiment compares the feed speed instruction signal Fw and the feed speed detection signal Fo as a measured value to each other, and outputs a phase shift time Tθd. The phase shift detection portion 26 may acquire the phase shift time Tθd by measuring a feeding operation of the feeding motor 24 when a parameter that defines the amplitude feeding, for example, the cycle Tf, the amplitude Wf, or the average feed speed Fave is variable.

The phase shift time Tθd is given to the wire tip position conversion portion 36B of the current setting portion 36. The wire tip position conversion portion 36B calculates the tip position of the welding wire 100 with respect to the base metal 200 as a reference surface based on the feed speed instruction signal Fw and the phase shift time Tθd, and gives the information of the calculated tip position to the current suppression period setting portion 36A. Here, the current suppression period setting portion 36A sets a period where the welding current is suppressed, that is, a period where the current setting signal Ir is controlled to the base current Ib based on the information of the tip position of the welding wire 100 or based on the information of the tip position of the welding wire 100 and the feed speed instruction signal Fw.

The current setting portion 36 described herein is an example of control means for changing the welding current depending on the tip position of the welding wire 100.

<Basic Control of Welding Current based on Information of Tip Position of Welding Wire or Feed Speed Instruction Signal Fw>

Hereinafter, a control example of the welding current by the welding power supply 140 based on the information of the tip position of the welding wire 100 or the feed speed instruction signal Fw will be described.

The control of the welding current is implemented by the current setting portion 36 configuring the welding power supply 140. As described above, the current setting portion 36 in the present embodiment implements the control by executing a program.

The current setting portion 36 in the present embodiment controls the switch of the current value of the welding current based on the information of the tip position of the welding wire 100 and the feed speed instruction signal Fw of the welding wire 100. Therefore, before describing the control of the welding current, a temporal change of the feed speed instruction signal Fw and a temporal change of the tip position of the welding wire 100 will be described.

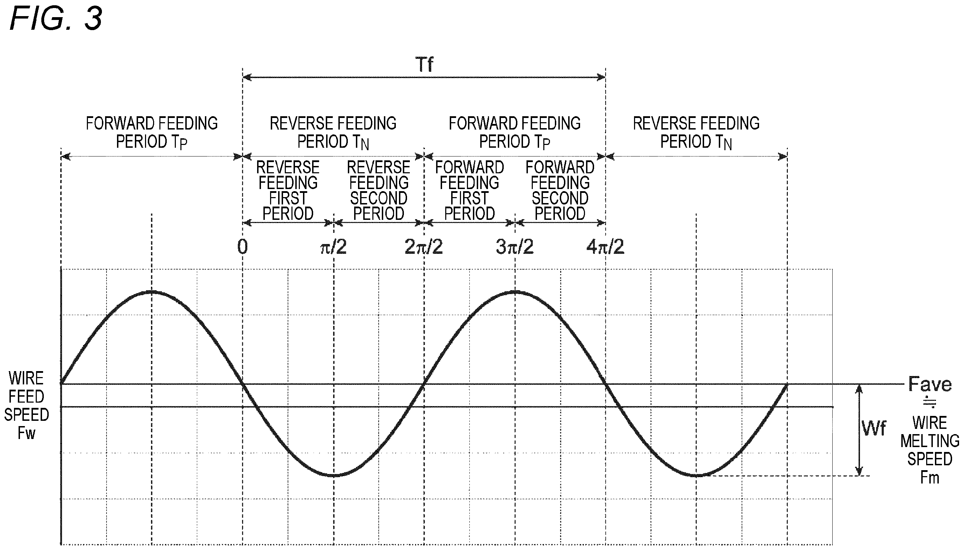

Fig. 3 is a waveform chart illustrating the temporal change of the feed speed instruction signal Fw. The horizontal axis represents time (phase), and the vertical axis represents the wire feed speed. The unit of the vertical axis is meters per minute or a rotating speed. In Fig. 3, a speed higher than the average feed speed Fave is represented as "forward feeding", and a speed lower than the average feed speed Fave is represented as "reverse feeding". In the present embodiment, the feed speed instruction signal Fw changes in a sinusoidal waveform defined by the cycle Tf and the amplitude Wf. Hereinafter, the period where the feed speed is higher than the average feed speed Fave will be referred to as the forward feeding period $T_P$. Conversely, the period where the feed speed is lower than the average feed speed Fave will be referred to as the reverse feeding period $T_N$. For convenience of description, the first half of each of the feeding periods will be referred to as "first period", and the second half thereof will be referred to as "second period".

Here, the average feed speed Fave can be considered a wire melting speed Fm. Hereinafter, as illustrated in Fig. 3, the amplitude feeding where the forward feeding period $T_P$ and the reverse feeding period $T_N$ are periodically repeated will also referred to as "initial condition".

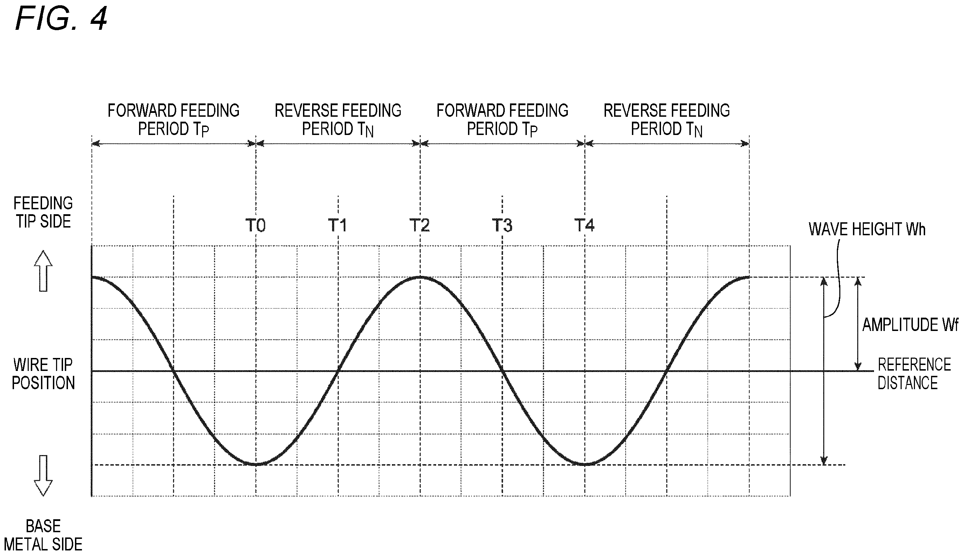

Fig. 4 is a waveform chart illustrating the temporal change of the tip position of the welding wire 100 (hereinafter, also referred to as "wire tip position"). The horizontal axis represents time (phase), and the vertical axis represents an upward distance (height) in a normal direction from the surface of the base metal 200.

Note that, in Fig. 4, a position (height) at which the welding wire 100 is fed at a maximum feed speed or at a minimum feed speed is represented as a reference distance, a distance more than the reference distance is represented as a positive value, and a distance less than the reference distance is represented as a negative value.

In Fig. 4, time points corresponding to a position where the tip position of the welding wire 100 is closest to the base metal surface (hereinafter, also referred to as "lowermost end") are represented by T0 and T4, and a time point corresponding to a position where the tip position of the welding wire 100 is farthest from the base metal surface (hereinafter, also referred to as "uppermost end") is represented by T2. The peak described herein is an example of the uppermost end.

As illustrated in Fig. 4, the period where the tip position of the welding wire 100 moves close to the base metal surface over time, specifically, the period where the tip position of the welding wire 100 moves from the uppermost end to the lowermost end is "the forward feeding period $T_P$", and the period where the tip position of the welding wire 100 moves away from the base metal surface over time, specifically, the period where the tip position of the welding wire 100 moves from the lowermost end to the uppermost end is "the reverse feeding period $T_N$".

Time points corresponding to the reference distance are represented by T1 and T3. T1 is an intermediate time point where the tip position of the welding wire 100 moves from the lowermost end as the position closest to the base metal surface toward the uppermost end as the position farthest from the base metal surface. On the other hand, T3 is an intermediate time point from the uppermost end toward the lowermost end. As illustrated in Fig. 4, a variation width from the reference distance to the uppermost end or a variation width from the reference distance to the lowermost end is "amplitude Wf", and a variation width from the uppermost end to the lowermost end is "wave height Wh".

As can be seen with reference to Figs. 3 and 4, the feed speed of the welding wire 100 when the tip of the welding wire 100 is positioned at the uppermost end or the lowermost end is a predetermined value of the average feed speed Fave. As a result, even when the wire feed speed periodically changes, the melting speed of the wire and the feed speed of the wire are balanced such that the arc length is substantially constant and stable welding can be continued.

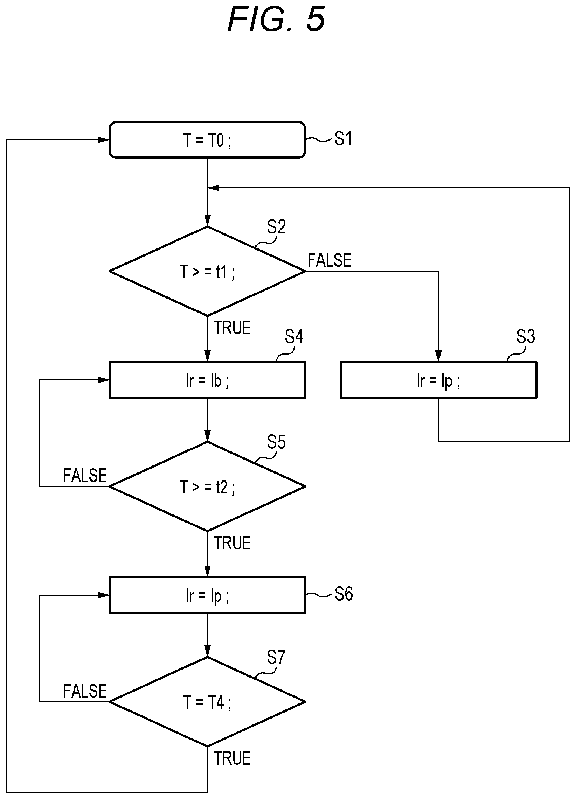

Fig. 5 is a flowchart illustrating an example of the basic control of the welding current in the present embodiment. The control illustrated in Fig. 5 is executed in the current setting portion 36 described with reference to Fig. 2. Reference numeral S in the drawing represents Step. The control illustrated in Fig. 5 corresponds to a change of one cycle at the tip position of the welding wire 100. Therefore, in Fig. 5, a state where time T is time point T0 is set as Step 1. The current setting portion 36 in the present embodiment calculates the tip position of the welding wire 100 to control the current setting signal Ir. The average feed speed Fave is the same as the wire melting speed Fm. Accordingly, when a difference between the feed speed instruction signal Fw and the wire melting speed Fm ($\approx$ Fave) is integrated, the tip position of the welding wire 100 can be acquired. Accordingly, the current setting portion 36 sets the tip position of the welding wire 100 based on the following expression.

$$\text{Wire Tip Position} = \int (Fw - Fave) \cdot dt \qquad \dots \qquad \text{Expression (2)}$$

The change of the tip position calculated by Expression (2) corresponds to Fig. 4.

Note that, when the feeding motor 24 described with reference to Fig. 2 is used for the feeding of the welding wire 100, a phase shift may occur between an instruction and an actual feed speed, that is, the feed speed detection signal Fo. Accordingly, the current setting portion 36 corrects a base current start time t1 that is calculated according to the tip position of the welding wire 100 calculated from the average feed speed Fave and the feed speed instruction signal Fw based on the phase shift time Tθd given from the phase shift detection portion 26. Specifically, the value of the base current start time t1 is reset as represented by the following expression.

$$t1 = t1 + T\theta d \qquad \ldots \qquad \text{Expression (3)}$$

Likewise, the current setting portion 36 corrects a base current end time t2 that is calculated from the average feed speed Fave and the feed speed instruction signal Fw based on the phase shift time T$\theta$d.

$$t2 = t2 + T\theta d \qquad \ldots \qquad \text{Expression (4)}$$

Here, from the viewpoint of the feed speed, a case where the base current start time t1 and the base current end time t2 are controlled is described. However, from the viewpoint of a position control, the same can be applied.

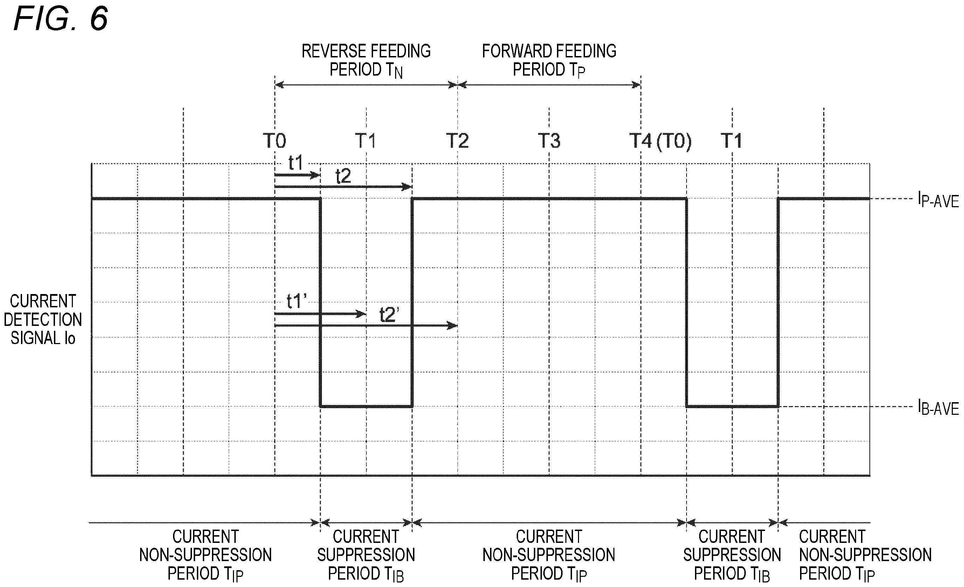

Fig. 6 is a diagram illustrating a control example of the current setting signal Ir for designating the current value of the welding current. The horizontal axis represents time, and the vertical axis represents the current detection signal Io. In the drawing, time points T0, T1, T2, T3, and T4 correspond to the time points T0, T1, T2, T3, and T4 in Fig. 4, respectively. The time points T0, T1, T2, T3, and T4 described herein are determined based on the tip position of the welding wire 100 that is calculated from the average feed speed Fave and the feed speed instruction signal Fw.

As illustrated in Fig. 6, the base current start time t1 represents a phase delayed from the time point T0 where the tip of the welding wire 100 is positioned at the lowermost end, that is, the time point at which the feeding of the welding wire 100 is switched from the forward feeding period $T_P$ to the reverse feeding period $T_N$. In Fig. 6, a maximum value of the base current start time t1 is represented by t1'.

Here, the description will be made referring back to Fig. 5. When the tip position of the welding wire 100 is the lowermost end, that is, the time point T0 as illustrated in Step 2, the current setting portion 36 determines whether a time T that starts to be measured from the time point T0 is the base current start time t1 or more. While the determination result of Step 2 is False, the current setting portion 36 continues to output the peak current Ip as the current setting signal Ir as illustrated in Step 3. The period corresponds to the current non-suppression period $T_{IP}$ in Fig. 6.

Next, when the determination result of Step 2 is True as illustrated in Fig. 5, the current setting portion 36 starts to output the base current Ib as the current setting signal Ir as illustrated in Step 4. As described above, at the time point where the switch to the base current Ib starts, the feeding of the welding wire 100 is already switched to the reverse feeding period $T_N$, and the tip of the welding wire 100 starts to move in the direction away from the base metal surface.

A droplet at the vicinity of the time point T0 where the tip of the welding wire 100 is positioned at the lowermost end is positioned in the vicinity of molten pool, and thus the arc length is short. After the time point T0, the feeding of the welding wire 100 is switched to the reverse feeding period $T_N$. That is, the tip of the welding wire 100 moves to be pulled up. In the entire grown droplet, inertial force acts in the forward feeding direction, that is, in the direction toward the base metal 200. On the other hand, the welding wire 100 moves in the opposite direction, that is, in the direction away from the base metal 200. Therefore, the droplet changes to a more suspended shape, and the release is further facilitated.

By switching the current value of the welding current to the base current Ib in advance in a period where the release is predicted, the arc reaction force can be reduced as compared to a period where the peak current Ip is supplied. As a result, a force to lift a droplet is further weakened, and the droplet is more likely to change to a suspended shape. As such, by releasing a droplet from the tip of the welding wire 100 in the current suppression period $T_{IB}$ that is the period where the welding current is suppressed, a reduction in spatter can be expected.

The description of Fig. 5 will be made again. As illustrated in Step 5, the current setting portion 36 that switched the current setting signal Ir to the base current Ib determines whether the time T is the base current end time t2 or more. In Fig. 6, a maximum value of the base current end time t2 is represented by t2'. While the determination result of Step 5 is False, the current setting portion 36 continues to output the base current Ib as the current setting signal Ir as illustrated in Step 4. After starting the supply of the base current Ib, the tip of the welding wire 100 moves to be pulled up to the peak, that is, the position farthest from the base metal 200 while releasing a droplet.

To melt the welding wire 100 to form a droplet after releasing a droplet, it is necessary to end the supply period of the base current Ib, that is, the current suppression period $T_{IB}$ and to be switched to the period where the peak current Ip is supplied, that is, the current non-suppression period $T_{IP}$. Accordingly, it is desirable to end the supply of the base current Ib between the time points T1 and T2.

When the determination result of Step 5 becomes True, the current setting portion 36 starts to output the peak current Ip as the current setting signal Ir as illustrated in Step 6. Next, as illustrated in Step 7, the current setting portion 36 determines whether the time T that starts to be measured from the time point T0 reaches the time point T4. While the determination result of Step 7 is False, the current setting portion 36 outputs the peak current Ip as the current setting signal Ir as illustrated in Step 6. On the other hand, when the determination result of Step 7 becomes True, the current setting portion 36 returns to Step 1. Through the above-described control, the current setting signal Ir forms a pulse waveform where the peak current Ip and the base current Ib are periodically repeated.

<Control Method of Droplet Release>

Hereinabove, the basic control of the welding current by the welding power supply 140 based on the information of the tip position of the welding wire 100 or the feed speed instruction signal Fw is described. In actual welding, in a construction situation or a welding environment such as disturbance, release may not occur as assumed.

In the present embodiment, by controlling each of the value of the frequency f, the peak current Ip, that is, the set current of the current non-suppression period $T_{IP}$, the base current Ib, that is, the set current of the current suppression period $T_{IB}$, the current non-suppression period $T_{IP}$ (also referred to as "peak current period"), the current suppression period $T_{IB}$ (also referred to as "base current period"), the forward feeding period $T_P$, and the reverse feeding period $T_N$ under conditions described below in detail, the droplet release control can be performed with higher accuracy.

The set current of the current non-suppression period $T_{IP}$ or the set current of the current suppression period $T_{IB}$ is not limited to a given current value, and the set value may change depending on periods. Therefore, as an index representing the thermal energy in the entire current non-suppression period $T_{IP}$ or the entire current suppression period $T_{IB}$, the average current of the current non-suppression period $T_{IP}$ or the current suppression period $T_{IB}$ is represented. The average current of the current non-suppression period $T_{IP}$ is represented by "$I_{P-AVE}$", and the average current of the current suppression period $T_{IB}$ is represented by "$I_{B-AVE}$".

Hereinafter, each of the control elements will be described in detail.

(Frequency f: 50 to 150 Hz)

A total period of the forward feeding period $T_P$ and the reverse feeding period $T_N$ is set as one cycle, and the frequency f is controlled to suppress short circuit by stably releasing or dropping a droplet formed at the welding wire tip. The frequency f is set in a range of 50 to 150 Hz as a condition described below, that is, a condition for maintaining the penetration depth and forming an optimal droplet size.

When the frequency f falls below 50 Hz, an excessive droplet is formed at the wire tip, but the inertial force acting on the droplet is insufficient. Therefore, the formed large droplet is likely to come into contact with the molten pool, and the droplet is not likely to be released. As a result, short circuit increases, and further, spatter increases and a stable penetration depth cannot be obtained.

On the other hand, when the frequency f exceeds 150 Hz, a droplet formed at the wire tip cannot grow up to an optimum size, and the inertial force is also insufficient. Therefore, stable release cannot be performed in the current suppression period $T_{IB}$. Therefore, a droplet is released at an unintentional timing such that short circuit occurs or spatter is generated.

Accordingly, the frequency f is defined in a range of 50 to 150 Hz and is preferably 60 to 130 Hz and more preferably 70 to 120 Hz.

The droplet size suitable for the above-described frequency f is preferably 1.7 to 5.0 mm$^3$ by average volume. The droplet size described herein refers to the size of a droplet immediately before release and is measured, for example, using a method of calculating the volume from the melting speed Fm or a method of calculating the volume based on a two-dimensional image obtained by performing imaging in one direction or in a plurality of directions using a visual sensor. When the average volume before release is in a range of 1.7 to 5.0 mm$^3$, short circuit can be more effectively suppressed, and a reduction in spatter and a stable penetration depth can be effectively obtained.

$$(0.65 \leq I_{P-AVE} / (I_{P-AVE} + I_{B-AVE}) \leq 0.90)$$

A ratio of $I_{P-AVE}$ to the sum of the average current $I_{P-AVE}$ of the current non-suppression period $T_{IP}$ and the average current $I_{B-AVE}$ of the current suppression period $T_{IB}$, that is, $I_{P-AVE} / (I_{P-AVE} + I_{B-AVE})$ is set in a range of 0.65 to 0.90.

When the above-described ratio falls below 0.65, an electromagnetic pinch force acting on a droplet in the current non-suppression period $T_{IP}$ is reduced, and it is difficult to release a droplet only with the inertial force in the current suppression period $T_{IB}$. Therefore, the release timing deviates such that short circuit is likely to occur. Due to the short circuit, spatter is generated, and a stable penetration depth cannot be obtained. In the current non-suppression period $T_{IP}$, the thermal energy tends to be reduced, and thus the penetration depth is shallow.

On the other hand, when the above-described ratio exceeds 0.90, the droplet size is excessively large in the current non-suppression period $T_{IP}$, an arc pressure to be applied to a droplet (hereinafter, the arc pressure to a droplet will also be referred to as "arc reaction force") is excessive, and a phenomenon in which the pushed droplet is released in a direction different from the molten pool occurs. Therefore, large-particle spatter is likely to be generated. Arc stop and long-term short circuit are also likely to occur. Therefore, spatter is generated, and a stable penetration depth cannot be obtained.

Accordingly, $I_{P\text{-}AVE}$ / ($I_{P\text{-}AVE}$ + $I_{B\text{-}AVE}$) is defined in a range of 0.65 to 0.90 and is preferably 0.70 to 0.85.

(Wave Height Wh: 14 to 35% with respect to Distance between Tip and Base Metal)

As illustrated in Fig. 4, the wave height Wh that is a variation width of the tip position of the welding wire 100 between the uppermost end and the lowermost end is set in a range of 14 to 35% with respect to a distance between the tip and the base metal. For example, when the distance between the tip and the base metal is 25 mm, the wave height Wh needs to be set as 3.75 mm to 8.75 mm.

When the wave height Wh is outside the range of 14 to 35% with respect to the distance between the tip and the base metal, short circuit cannot be prevented. "Reference distance" as a reference position of the wave height Wh or the amplitude Wf may be freely set.

$$(0.30 \leq T_{IB} / (T_{IP} + T_{IB}) \leq 0.60)$$

A ratio of the current suppression period $T_{IB}$ to the sum of any current non-suppression period $T_{IP}$ and the current suppression period $T_{IB}$ immediately after the current non-suppression period $T_{IP}$, that is, $T_{IB}$ / ($T_{IP}$ + $T_{IB}$) is set in a range of 0.30 to 0.60.

When the above-described ratio falls below 0.30, a droplet formed at the wire tip is not completely released in the current suppression period $T_{IB}$, and is likely to be released while receiving the arc reaction force in the current non-suppression period $T_{IP}$. Thus, short circuit also increases, and further, spatter increases and a stable penetration depth cannot be obtained.

On the other hand, when the above-described ratio exceeds 0.60, the electromagnetic pinch force is insufficient. Therefore, stable release cannot be performed in the current suppression period $T_{IB}$. Therefore, a droplet is released at an unintentional timing such that short circuit occurs or spatter is generated.

Accordingly, $T_{IB}$ / ($T_{IP}$ + $T_{IB}$) is defined in a range of 0.30 to 0.60 and is preferably 0.31 to 0.58 and more preferably 0.31 to 0.52.

$$(0.40 \leq T_N / (T_P + T_N) \leq 0.70)$$

A ratio of the reverse feeding period $T_N$ to the sum of the forward feeding period $T_P$ and the reverse feeding period $T_N$, that is, $T_N$ / ($T_P$ + $T_N$) is set in a range of 0.40 to 0.70.

When the above-described ratio falls below 0.40, a sufficient time required for droplet release cannot be obtained, and stable release cannot be performed in the current suppression period $T_{IB}$. Therefore, a droplet is released at an unintentional timing such that short circuit occurs or spatter is generated.

On the other hand, when the above-described ratio exceeds 0.70, a droplet formed at the wire tip is finely drawn, and short circuit is likely to occur before the reverse feeding period $T_N$ starts. Accordingly, $T_N$ / ($T_P$ + $T_N$) is defined in a range of 0.40 to 0.70.

$$\{T_N / (T_P + T_N)\} > \{T_{IB} / (T_{IP} + T_{IB})\}$$

A relationship between $\{T_N / (T_P + T_N)\}$ that is the ratio of the reverse feeding period $T_N$ to the sum of the forward feeding period $T_P$ and the reverse feeding period $T_N$ and $\{T_{IB} / (T_{IP} + T_{IB})\}$ that is the ratio of the current suppression period $T_{IB}$ to the sum of the current non-suppression period $T_{IP}$ and the current suppression period $T_{IB}$ is set as $\{T_N / (T_P + T_N)\} > \{T_{IB} / (T_{IP} + T_{IB})\}$.

When the value of $\{T_N / (T_P + T_N)\}$ is the value of $\{T_{IB} / (T_{IP} + T_{IB})\}$ or less, the arc force is insufficient at a timing at which the tip of the wire approaches the molten pool before reverse feeding occurs, and the penetration depth is shallow.

That is, when the wire tip has a sufficient arc pressure immediately before being positioned at the lowermost end, even when the average arc length is short, a buried arc state without short circuit is established such that a sufficient penetration depth can be obtained. However, as described above, when a timing before and after the wire tip is positioned at the lowermost end is the current suppression period $T_{IB}$, a sufficient arc pressure cannot be obtained. Therefore, a droplet is likely to come into contact with the molten pool to cause short circuit to occur, and thus a sufficient penetration depth cannot be obtained.

The buried arc refers to a state where the wire is buried in the molten pool at a strong arc pressure to generate an arc. In general, the arc pressure increases as the welding current increases.

(Current Non-Suppression Period $T_{IP}$ Account for 2/3 or more of the Forward Feeding Period $T_P$)

The current non-suppression period $T_{IP}$ needs to account for 2/3 or more of the period where the tip of the welding wire 100 moves from the uppermost end to the lowermost end. Here, the period where the wire tip position moves from the uppermost end to the lowermost end refers to the forward feeding period $T_P$ as described above.

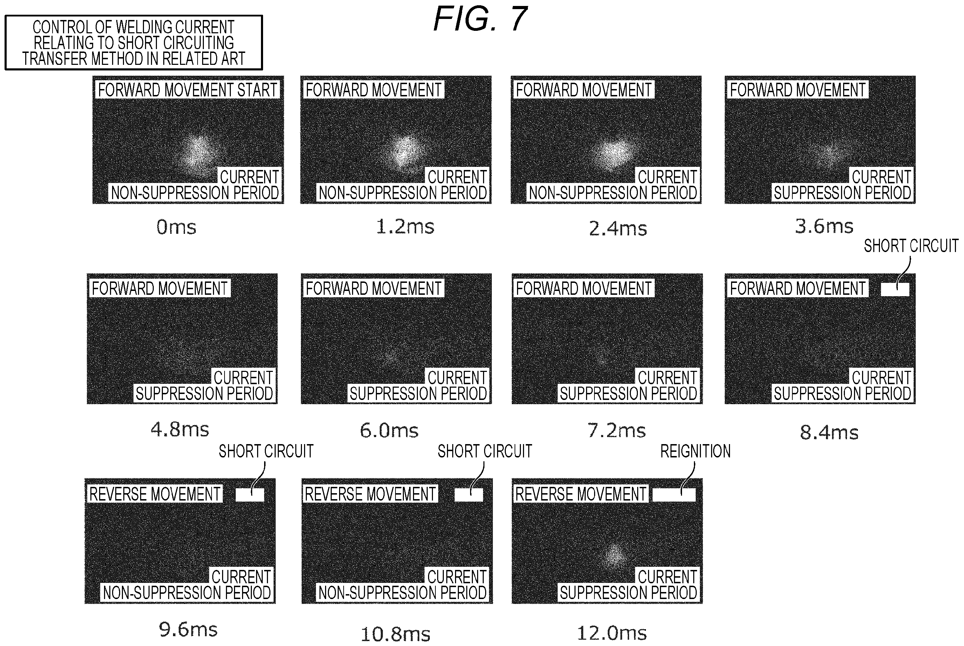

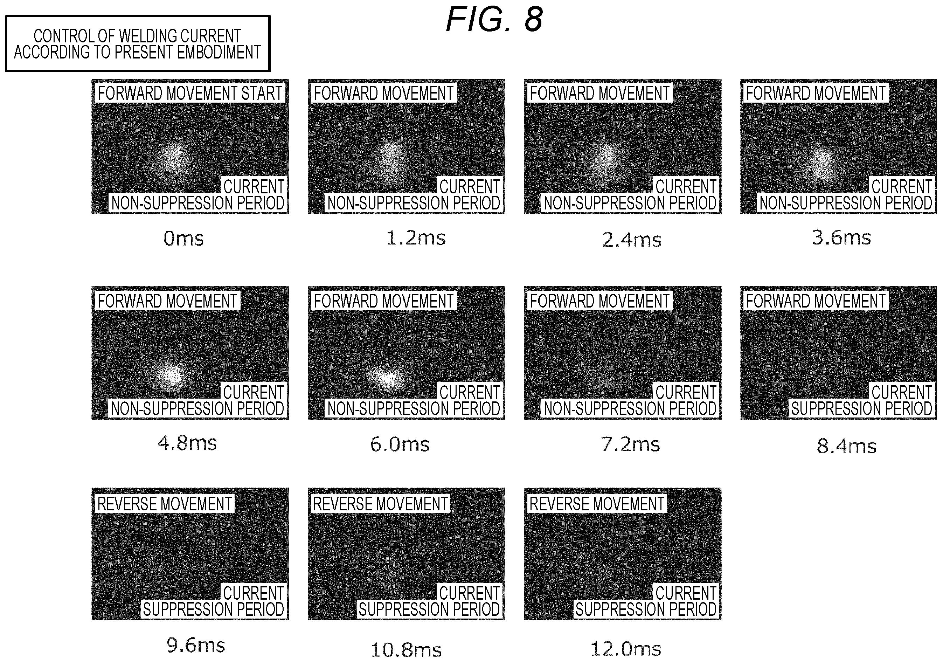

Here, the description will be made with reference to Figs. 7 and 8. Fig. 7 is a sequence of photographs by a high-speed camera illustrating an example of a progress state of welding in a short circuiting transfer method in the related art together with forward or reverse movement of the welding wire, the current non-suppression period, and the current suppression period, and is a sequence of photographs in substitution for a drawing taken every elapsed time for Test No. 24 as Reference Example described below. Fig. 8 is a sequence of photographs by a high-speed camera illustrating an example of a progress state of welding in the present embodiment together with forward or reverse movement of the welding wire, the current non-suppression period, and the current suppression period, and is a sequence of photographs in substitution for a drawing taken every elapsed time for Test No. 8 as Example described below.

As illustrated in Fig. 7, in the wire feeding control of the short circuiting transfer method in the related art, the forward feeding period $T_P$ represented by "Forward Movement" in the drawing is from 0 ms to about 8.4 ms and is substantially 8.4 ms. On the other hand, the current non-suppression period $T_{IP}$ in the forward feeding period $T_P$ is from 0 ms to about 2.4 ms and is substantially 2.4 ms. Therefore, it can be seen that a ratio of the current non-suppression period $T_{IP}$ to the forward feeding period $T_P$ is less than 1/2.

As such, in the wire feeding control of the short circuiting transfer method in the related art, by controlling the ratio of the current non-suppression period $T_{IP}$ to the forward feeding period $T_P$ to be less than 1/2, low spatter welding can be implemented, but the arc pressure does not act on the molten pool. Therefore, the penetration depth is shallow.

On the other hand, as illustrated in Fig. 8, in the wire feeding control according to the present embodiment, the forward feeding period $T_P$ is from 0 ms to about 8.4 ms and is substantially 8.4 ms. On the other hand, the current non-suppression period $T_{IP}$ in the forward feeding period $T_P$ is from 0 ms to about 7.2 ms and is substantially 7.2 ms. Therefore, it can be seen that a ratio of the current non-suppression period $T_{IP}$ to the forward feeding period $T_P$ is 2/3 or more.

As such, in the wire feeding control according to the present embodiment, by controlling the ratio of the current non-suppression period $T_{IP}$ to the forward feeding period $T_P$ to be 2/3 or more, the wire tip is buried in the molten pool at a sufficient arc pressure in the process of approaching the molten pool. Therefore, the penetration depth is deep.

Next, preferable conditions of the present embodiment will be described in detail.

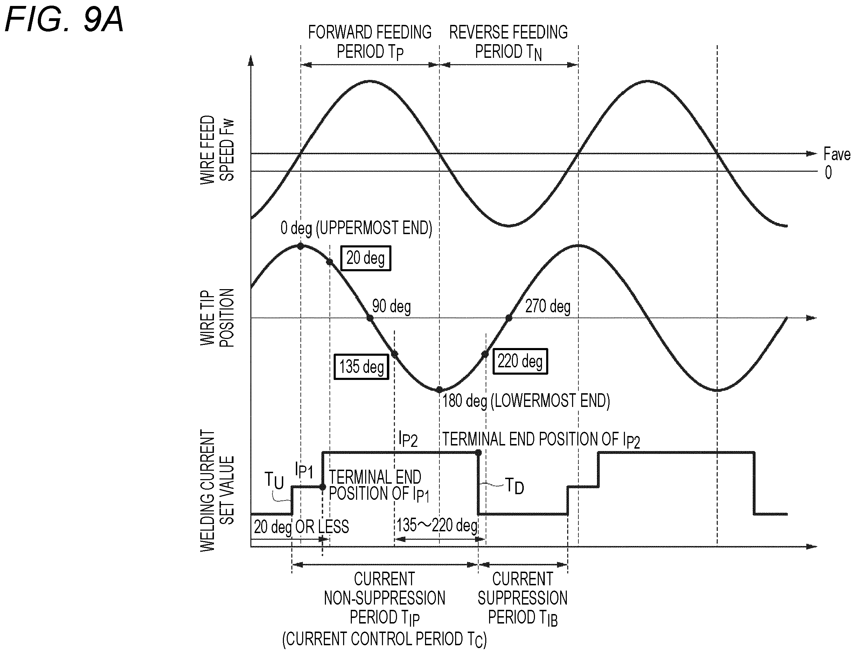

As illustrated in Fig. 9A, it is preferable that the current non-suppression period $T_{IP}$ is divided into a rising period $T_U$ immediately after the current suppression period $T_{IB}$ where the welding current changes from the base current to a predetermined current value, a falling period $T_D$ immediately before the current suppression period $T_{IB}$ where the welding current changes from the predetermined current value to the base current, and a current control period $T_C$ other than the rising period $T_U$ and the falling period $T_D$ for the current control.

To adjust the droplet size or to facilitate the droplet release, a ratio of the rising period $T_U$ to the current non-suppression period $T_{IP}$, that is, the value of "(rising period $T_U$ / current non-suppression period $T_{IP}$) $\times$ 100%" is preferably 20% or less. Regarding the rising manner of the welding current value in the rising period $T_U$, a sharp change may appear as illustrated in Fig. 9A, in other words, the ratio of the rising period $T_U$ to the current non-suppression period $T_{IP}$ may be as close to 0% as possible.

To adjust the droplet size before reverse feeding, a ratio of the falling period $T_D$ to the current non-suppression period $T_{IP}$, that is, the value of "(falling period $T_D$ / current non-suppression period $T_{IP}$) $\times$ 100%" is preferably 20% or less. Regarding the falling manner of the welding current value in the falling period $T_D$, a sharp change may appear as illustrated in Fig. 9A, in other words, the ratio of the falling period $T_D$ to the current non-suppression period $T_{IP}$ may be as close to 0% as possible.

The rising period $T_U$ or the falling period $T_D$ may change in any of a linear shape, a curved shape, or a stepwise shape or in a combination thereof.

Next, as illustrated in Fig. 9A, it is preferable to provide at least two welding current set values in the current control period $T_C$. Here, the two welding current set values are set as a first welding current set value $I_{P1}$ and a second welding current set value $I_{P2}$.

When the uppermost end position of the welding wire 100 is set as 0 deg as a reference, it is preferable that a terminal end position of a range of the first welding current set value $I_{P1}$ is set in a range of 20 deg or less at a timing at which the first welding current set value $I_{P1}$ is provided. By setting the terminal end position of the range of the first welding current set value $I_{P1}$ in the range of 20 deg or less, the swing of a droplet that starts to be formed can be suppressed, and more stable release can be maintained.

When the uppermost end position of the welding wire 100 is set as 0 deg as a reference, it is preferable that a terminal end position of a range of the second welding current set value $I_{P2}$ is set in a range of 135 to 220 deg at a timing at which the second welding current set value $I_{P2}$ is provided. By setting the terminal end position of the range of the second welding current set value $I_{P2}$ in the range of 135 to 220 deg, the arc pressure can act effectively on the molten pool, and a stable penetration depth can be obtained.

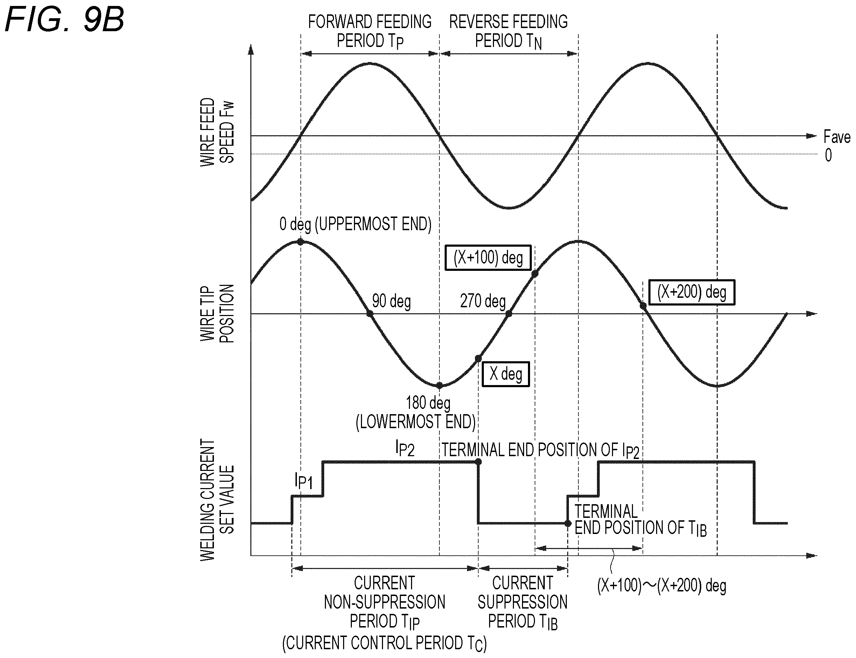

As illustrated in Fig. 9B, when a terminal end of the range of the welding current set value $I_{P2}$ is set as a terminal end of the current control period $T_C$, and when the terminal end position of the welding current set value $I_{P2}$ is set as X deg, it is preferable that a terminal end position of the current suppression period $T_{IB}$ is set in a range of (X + 100) to (X + 220) deg. By setting the terminal end position of the current suppression period $T_{IB}$ in the range of (X + 100) to (X + 220) deg, the current suppression period $T_{IB}$ includes a timing at which the maximum inertial force acts, which is preferable from the viewpoint of stabilizing the droplet release.

The welding current set as the first welding current set value $I_{P1}$ is preferably in a range of 250 to 600 A, and the welding current set as the second welding current set value $I_{P2}$ is preferably in a range of 300 to 650 A. By setting each of the set currents of the first welding current set value $I_{P1}$ and the second welding current set value $I_{P2}$ in the above-described range, the effect obtained by providing the first welding current set value $I_{P1}$ and the second welding current set value $I_{P2}$ can be further improved.

The welding current set as the second welding current set value $I_{P2}$ is always higher than the welding current set as the first welding current set value $I_{P1}$.

It is preferable that external characteristics of a welding power supply are provided in the current control period $T_C$, specifically, in the period of the first welding current set value $I_{P1}$ and the second welding current set value $I_{P2}$. More specifically, by setting the external characteristics of the welding power supply in a range of 0.05 V to 20 V / 100 A, for example, even when the protrusion length during welding changes, the arc length is controlled to be substantially constant by changing the welding current.

From the viewpoint of adjusting the droplet size, it is preferable that the average current $I_{P-AVE}$ of the current non-suppression period $T_{IP}$ is in a range of 300 to 650 A and the average current $I_{B-AVE}$ of the current suppression period $T_{IB}$ is in a range of 80 to 150 A. From the viewpoint of adjusting the droplet size, it is preferable that the current non-suppression period $T_{IP}$ is in a range of 3.0 to 12.0 ms and the current suppression period $T_{IB}$ is in a range of 2.0 to 9.0 ms.

Preferable ranges of the forward feeding period $T_P$ and the reverse feeding period $T_N$ are periods calculated from the defined range of each of the frequency f and $\{T_N / (T_P + T_N)\}$.

[Examples]

Hereinafter, the present invention will be described in more detail using Examples. The present invention is not limited to Examples, changes can be made within a range where the scope of the present invention is adaptable, and the changes are also included in the technical scope of the present invention.

[1. Preliminary Test]

First, before performing a main test described below, a preliminary test was performed for a relationship between a short circuit frequency and a penetration depth.

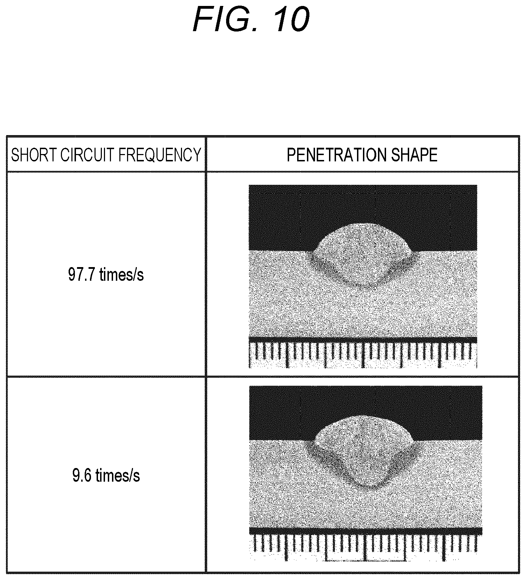

Fig. 10 is a diagram illustrating the relationship between the short circuit frequency and the penetration depth. In Fig. 10, the upper photograph is a cross-sectional photograph of a weld zone when the preliminary test was performed under welding conditions of a welding current of 309 A, a welding voltage of 36.7 V, and a welding speed of 50 cm/min and a short circuit frequency at this time was 97.7 times/second. In Fig. 10, the lower photograph is a cross-sectional photograph of a weld zone when the preliminary test was performed under welding conditions of a welding current of 307 A, a welding voltage of 36.8 V, and a welding speed of 50 cm/min and a short circuit frequency at this time was 96 times/second.

As can be seen from the cross-sectional photographs, a correlation was recognized between the short circuit frequency and the penetration depth, and it is understood that the penetration of the weld zone was deep in the lower test example where the short circuit frequency was significantly low. It was verified that, when the short circuit frequency is low, the generation of spatter is small. That is, it is considered that, when the short circuit frequency is low, the stable penetration depth and a reduction in spatter are achieved. As a result, in the following main test, whether the stable penetration depth and a reduction in spatter are achieved is determined based on the result of the short circuit frequency.

[2. Main Test]

Next, as a test for verifying the effect of the welding control method according to the present invention, each of tests of Examples and Comparative Examples was performed.

<Common Welding Conditions>

Common welding conditions were as follows.
Welding wire: mild steel solid wire
Base metal: SS400 (rolled steel for general structure, JIS G 3101:2004)
Welding speed of welding wire: 40 cm/min
Welding method: bead on plate welding

<Evaluation Method>

As described above in [1. Preliminary Test], it is considered that there is the correlation between the result of the short circuit frequency and whether the stable penetration depth and a reduction in spatter are achieved. Therefore, the stable penetration depth and a reduction in spatter were evaluated based on the short circuit frequency. In the main test, a case where the short circuit frequency was 5.0 times/sec or less was evaluated as A (excellent), a case where the short circuit frequency was more than 5.0 times/sec and 10.0 times/sec or less was evaluated as B (good), and a case where the short circuit frequency was more than 10.0 times/sec was evaluated as C (bad).
Tables 1 and 2 show the test results together with welding conditions other than the common test conditions.

[Table 1]

| | Test No. | Frequency f (Hz) | Wave Height Wh (mm) | Distance between Tip and Base Metal (mm) | (Wave Height Wh / Distance between Tip and Base Metal) × 100 (%) | Average Current $I_{P\text{-}AVE}$ of Current Non-Suppression Period (A) | Average Current $I_{B\text{-}AVE}$ of Current Suppression Period (A) | $I_{P\text{-}AVE}/(I_{P\text{-}AVE}+I_{B\text{-}AVE})$ | Current Non-Suppression Period $T_{IP}$ (ms) | Current Suppression Period $T_{IB}$ (ms) | $T_{IB}/(T_{IP}+T_{IB})$ | $T_P/(T_P+T_N)$ | $T_N/(T_P+T_N)$ | $\{T_N/(T_P+T_N)>T_{IB}/(T_{IP}+T_{IB})\}$ | Whether $T_{IP}$ accounts for 2/3 or more of $T_P$ |
|---|---|---|---|---|---|---|---|---|---|---|---|---|---|---|---|
| Example | 1 | 60 | 4.8 | 25 | 19 | 420 | 80 | 0.84 | 10.7 | 6.1 | 0.36 | 0.50 | 0.50 | ○ | ○ |
| | 2 | 130 | 4.3 | 25 | 17 | 510 | 100 | 0.84 | 5.1 | 2.6 | 0.33 | 0.40 | 0.60 | ○ | ○ |
| | 3 | 90 | 3.8 | 25 | 15 | 475 | 80 | 0.86 | 7.2 | 3.9 | 0.35 | 0.50 | 0.50 | ○ | ○ |
| | 4 | 100 | 8 | 25 | 32 | 480 | 83 | 0.85 | 6.6 | 3.5 | 0.35 | 0.50 | 0.50 | ○ | ○ |
| Example | 5 | 70 | 4.6 | 20 | 23 | 300 | 150 | 0.67 | 6.8 | 7.5 | 0.52 | 0.40 | 0.60 | ○ | ○ |
| | 6 | 100 | 4.3 | 25 | 17 | 610 | 80 | 0.88 | 5.3 | 4.7 | 0.47 | 0.40 | 0.60 | ○ | ○ |
| | 7 | 120 | 5.5 | 25 | 22 | 540 | 95 | 0.85 | 5.7 | 2.6 | 0.31 | 0.60 | 0.40 | ○ | ○ |
| | 8 | 70 | 5 | 15 | 33 | 460 | 100 | 0.82 | 6.1 | 8.3 | 0.58 | 0.40 | 0.60 | ○ | ○ |
| | 9 | 70 | 4 | 15 | 27 | 320 | 90 | 0.78 | 8.8 | 5.5 | 0.38 | 0.60 | 0.40 | ○ | ○ |
| | 10 | 100 | 5 | 15 | 33 | 530 | 100 | 0.84 | 5.9 | 4.1 | 0.41 | 0.30 | 0.70 | ○ | ○ |

| Example | Test No. | Frequency f (Hz) | Wave Height Wh (mm) | Distance between Tip and Base Metal (mm) | (Wave Height Wh / Distance between Tip and Base Metal) × 100 (%) | Average Current $I_{P-AVE}$ of Current Non-Suppression Period (A) | Average Current $I_{B-AVE}$ of Current Suppression Period (A) | $I_{P-AVE}$ / ($I_{P-AVE}$ + $I_{B-AVE}$) | Current Non-Suppression Period $T_{IP}$ (ms) | Current Suppression Period $T_{IB}$ (ms) | $T_{IB}$ / ($T_{IP}$ + $T_{IB}$) | $T_P$ / ($T_P$ + $T_N$) | $T_N$ / ($T_P$ + $T_N$) | {$T_N$ / ($T_P$ + $T_N$) > $T_{IB}$ / ($T_{IP}$ + $T_{IB}$)} | Whether $T_{IP}$ accounts for 2/3 or more of $T_P$ |
|---|---|---|---|---|---|---|---|---|---|---|---|---|---|---|---|
| Comparative Example | 11 | 45 | 4.3 | 25 | 17 | 480 | 100 | 0.83 | 13.7 | 8.5 | 0.38 | 0.50 | 0.50 | ○ | ○ |
| | 12 | 155 | 4.5 | 25 | 18 | 390 | 110 | 0.78 | 4.2 | 2.3 | 0.35 | 0.60 | 0.40 | ○ | ○ |
| | 13 | 98 | 3.3 | 25 | 13 | 475 | 95 | 0.83 | 6.5 | 3.7 | 0.36 | 0.50 | 0.50 | ○ | ○ |
| | 14 | 100 | 9.5 | 25 | 38 | 510 | 90 | 0.85 | 6.6 | 3.4 | 0.34 | 0.40 | 0.60 | ○ | ○ |
| | 15 | 70 | 2 | 15 | 13 | 255 | 100 | 0.72 | 11.2 | 3.1 | 0.22 | 0.60 | 0.40 | ○ | ○ |
| | 16 | 70 | 6 | 15 | 40 | 240 | 100 | 0.71 | 12.3 | 2.0 | 0.14 | 0.50 | 0.50 | ○ | ○ |
| | 17 | 70 | 4.6 | 20 | 23 | 300 | 200 | 0.60 | 6.8 | 7.5 | 0.52 | 0.50 | 0.50 | × | ○ |
| | 18 | 120 | 4.3 | 25 | 17 | 650 | 65 | 0.91 | 5.5 | 2.8 | 0.34 | 0.50 | 0.50 | ○ | ○ |
| | 19 | 120 | 5.5 | 25 | 22 | 530 | 95 | 0.85 | 6.0 | 2.4 | 0.29 | 0.60 | 0.40 | ○ | ○ |
| | 20 | 70 | 5 | 15 | 33 | 360 | 100 | 0.78 | 5.1 | 9.2 | 0.64 | 0.50 | 0.50 | × | ○ |
| | 21 | 70 | 4 | 15 | 27 | 320 | 90 | 0.78 | 8.9 | 5.5 | 0.38 | 0.65 | 0.35 | × | ○ |
| | 22 | 70 | 5 | 15 | 33 | 400 | 100 | 0.80 | 5.7 | 8.6 | 0.60 | 0.25 | 0.75 | ○ | ○ |
| | 23 | 100 | 6 | 25 | 24 | 530 | 90 | 0.85 | 4.9 | 5.1 | 0.51 | 0.50 | 0.50 | × | ○ |
| Reference Example | 24 | Feeding Control Process by Short Circuiting Transfer Method in Related Art | | | | | | | | | | | | | × |

EP 4 382 236 A1

[Table 2]

| Example | Test No. | Welding Current Set Value $I_{P1}$ | | Welding Current Set Value $I_{P2}$ | | Terminal End Position of $T_{IB}$ - Terminal End Position of $I_{P2}$ (deg) | (Rising Period / $T_{IP}$) × 100 (%) | (Falling Period / $T_{IP}$) × 100 (%) | Average Volume of Droplets Released ($mm^3$) | Evaluation | |
|---|---|---|---|---|---|---|---|---|---|---|---|
| | | Set Current (A) | Terminal End Position (deg) | Set Current (A) | Terminal End Position (deg) | | | | | Short Circuit Frequency (Times/s) | Penetration Depth, Reduction in Spatter |
| Example | 1 | 400 | 15.0 | 430 | 157.0 | 130.7 | 5.6 | 4.7 | 4.7 | 8.4 | B |
| | 2 | 500 | 18.7 | 520 | 215.1 | 119.2 | 9.8 | 11.7 | 2.5 | 0 | A |
| | 3 | 450 | 16.4 | 490 | 196.4 | 126.8 | 9.8 | 7.0 | 3.1 | 9.5 | B |
| | 4 | 470 | 14.4 | 490 | 198.0 | 124.2 | 9.2 | 9.2 | 3.0 | 0 | A |
| | 5 | 250 | 15.1 | 310 | 143.5 | 188.8 | 8.8 | 8.8 | 3.5 | 5.7 | B |
| | 6 | 580 | 18.0 | 620 | 162.0 | 168.3 | 13.2 | 11.3 | 3.4 | 6.3 | B |
| | 7 | 500 | 17.3 | 550 | 216.9 | 112.8 | 10.5 | 8.8 | 3.0 | 0 | A |
| | 8 | 440 | 7.6 | 470 | 141.0 | 209.0 | 8.2 | 8.2 | 1.9 | 7.0 | B |
| | 9 | 270 | 10.1 | 340 | 209.0 | 138.5 | 6.8 | 8.0 | 3.8 | 3.3 | A |
| | 10 | 500 | 18.0 | 550 | 180.0 | 147.6 | 11.9 | 10.2 | 3.0 | 4.9 | A |

| Example | Test No. | Welding Current Set Value $I_{P1}$ | | Welding Current Set Value $I_{P2}$ | | Terminal End Position of $T_{IB}$ - Terminal End Position of $I_{P2}$ (deg) | (Rising Period / $T_{IP}$) × 100 (%) | (Falling Period / $T_{IP}$) × 100 (%) | Average Volume of Droplets Released (mm³) | Evaluation | |
|---|---|---|---|---|---|---|---|---|---|---|---|
| | | Set Current (A) | Terminal End Position (deg) | Set Current (A) | Terminal End Position (deg) | | | | | Short Circuit Frequency (Times/s) | Penetration Depth, Reduction in Spatter |
| Comparative Example | 11 | 470 | 17.8 | 500 | 204.3 | 137.8 | 4.6 | 4.7 | 6.3 | 35.3 | C |
| | 12 | 340 | 16.6 | 410 | 188.3 | 124.6 | 11.9 | 10.1 | 1.6 | 125.6 | C |
| | 13 | 440 | 14.1 | 490 | 197.6 | 130.6 | 6.2 | 10.0 | 2.7 | 59.3 | C |
| | 14 | 420 | 14.4 | 530 | 213.1 | 122.4 | 7.6 | 9.1 | 3.6 | 110.9 | C |
| | 15 | 240 | 30.2 | 270 | 241.7 | 78.0 | 3.6 | 5.4 | 1.9 | 52.4 | C |
| | 16 | 220 | 16.4 | 250 | 264.3 | 50.3 | 4.1 | 4.1 | 1.9 | 72.1 | C |
| | 17 | 280 | 15.1 | 310 | 142.2 | 188.8 | 10.3 | 10.3 | 2.1 | 79.2 | C |
| | 18 | 580 | 13.0 | 660 | 221.2 | 121.4 | 14.5 | 14.5 | 3.3 | 96.5 | C |
| | 19 | 520 | 17.3 | 540 | 234.2 | 104.1 | 11.7 | 13.3 | 3.1 | 49.4 | C |
| | 20 | 350 | 16.9 | 370 | 125.9 | 231.6 | 11.8 | 11.8 | 2.4 | 70.8 | C |
| | 21 | 300 | 19.6 | 340 | 203.9 | 138.5 | 6.7 | 10.1 | 1.9 | 77.2 | C |
| | 22 | 330 | 12.6 | 420 | 103.2 | 216.5 | 8.8 | 8.8 | 2.0 | 84 | C |
| | 23 | 520 | 18.0 | 540 | 162.0 | 183.6 | 14.3 | 16.3 | 3.2 | 100.3 | C |

As shown in Tables 1 and 2, Tests No. 1 to No. 10 were Examples satisfying all the requirements of the present invention, and results where the short circuit frequency was extremely low were obtained. Accordingly, the penetration depth was deep, and the amount of spatter generated was small. On the other hand, Tests No. 11 to 23 were Comparative Examples not satisfying at least a part of the requirements of the present invention, and results where the short circuit frequency was extremely high were obtained. Accordingly, the penetration depth was shallow, and the amount of spatter generated was large.

In Table 1, in "Frequency f (Hz)", "(Wave Height Wh / Distance between Tip and Base metal) $\times$ 100 (%)", "$I_{P\text{-}AVE}$ / ($I_{P\text{-}AVE}$ + $I_{B\text{-}AVE}$)", "$T_{IB}$ / ($T_{IP}$ + $T_{IB}$)", "$T_N$ / ($T_P$ + $T_N$)", and "{$T_N$ / ($T_P$ + $T_N$)} > {$T_{IB}$ / ($T_{IP}$ + $T_{IB}$)}", numerical values not satisfying the range of the present invention are underlined and shown.

Test No. 24 in Table 1 was Reference Example where the feeding process by the short circuiting transfer method in the related art described above using Fig. 8 was adopted, and was an example not satisfying the condition that the current non-suppression period $T_{IP}$ accounts for 2/3 or more of the forward feeding period $T_P$.

Hereinafter, each of the tests will be discussed in detail.

Test No. 1 as Example satisfied all of the requirements of the present invention. In particular, the frequency f was 60 Hz, which satisfied the range of 50 to 150 Hz. Therefore, the inertial force acted on the wire tip, the short circuit frequency was low, and the evaluation result was B.

Test No. 2 as Example satisfied all of the requirements of the present invention. In particular, the frequency f was 130 Hz, which satisfied the range of 50 to 150 Hz. Therefore, the inertial force acted on the wire tip, the short circuit frequency was low, and the evaluation result was A.

Test No. 3 as Example satisfies all of the requirements of the present invention. In particular, {(Wave Height Wh / Distance between Tip and Base metal) $\times$ 100} was 15%, which satisfied the range of 14 to 35%. Therefore, the inertial force acted on the wire tip, the short circuit frequency was low, and the evaluation result was B.

Test No. 4 as Example satisfies all of the requirements of the present invention. In particular, {(Wave Height Wh / Distance between Tip and Base metal) $\times$ 100} was 32%, which satisfied the range of 14 to 35%. Therefore, the inertial force acted on the wire tip, the short circuit frequency was low, and the evaluation result was A.

Test No. 5 as Example satisfies all of the requirements of the present invention. In particular, {$I_{P\text{-}AVE}$ / ($I_{P\text{-}AVE}$ + $I_{B\text{-}AVE}$)} was 0.67, which satisfied the range of 0.65 to 0.90. Therefore, the droplet size was appropriate, the electromagnetic pinch force also acted efficiently, the short circuit frequency was low, and the evaluation result was B.

Test No. 6 as Example satisfies all of the requirements of the present invention. In particular, {$I_{P\text{-}AVE}$ / ($I_{P\text{-}AVE}$ + $I_{B\text{-}AVE}$)} was 0.88, which satisfied the range of 0.65 to 0.90. Therefore, the droplet size was appropriate, the electromagnetic pinch force also acted efficiently, the short circuit frequency was low, and the evaluation result was B.

Test No. 7 as Example satisfies all of the requirements of the present invention. In particular, {$T_{IB}$ / ($T_{IP}$ + $T_{IB}$)} was 0.31, which satisfied the range of 0.30 to 0.60. Therefore, the droplet size was appropriate, the electromagnetic pinch force also acted efficiently, the short circuit frequency was low, and the evaluation result was A.

Test No. 8 as Example satisfies all of the requirements of the present invention. In particular, {$T_{IB}$ / ($T_{IP}$ + $T_{IB}$)} was 0.58, which satisfied the range of 0.30 to 0.60. Therefore, the droplet size was appropriate, the electromagnetic pinch force also acted efficiently, the short circuit frequency was low, and the evaluation result was B.

Test No. 9 as Example satisfies all of the requirements of the present invention. In particular, {$T_N$ / ($T_P$ + $T_N$)} was 0.40, which satisfied the range of 0.40 to 0.70. Therefore, the inertial force acted efficiently on the wire tip, the short circuit frequency was low, and the evaluation result was A.

Test No. 10 as Example satisfies all of the requirements of the present invention. In particular, {$T_N$ / ($T_P$ + $T_N$)} was 0.70, which satisfied the range of 0.40 to 0.70. Therefore, the inertial force acted efficiently on the wire tip, the short circuit frequency was low, and the evaluation result was A.

On the other hand, in Test No. 11 as Comparative Example, the frequency f was 45 Hz, which was less than the range defined by the present invention. Therefore, the inertial force acting on the wire tip was insufficient, and a droplet was not able to be released. As a result, the short circuit frequency was high, and the evaluation result was C.

In Test No. 12 as Comparative Example, the frequency f was 155 Hz, which was more than the range defined by the present invention. Therefore, the droplet size was extremely small, the inertial force acting on the wire tip was insufficient, and a droplet was not able to be released. As a result, the short circuit frequency was high, and the evaluation result was C.

In Test No. 13 as Comparative Example, {(Wave Height Wh / Distance between Tip and Base metal) $\times$ 100 (%)} was 13%, which was less than the range defined by the present invention. Therefore, the inertial force acting on the wire tip was insufficient, and a droplet was not able to be released. As a result, the short circuit frequency was high, and the evaluation result was C.

In Test No. 14 as Comparative Example, {(Wave Height Wh / Distance between Tip and Base metal) $\times$ 100 (%)} was 38%, which was more than the range defined by the present invention. Therefore, even when the arc length was typical, short circuit increased. As a result, the short circuit frequency was high, and the evaluation result was C.

In Test No. 15 as Comparative Example, {(Wave Height Wh / Distance between Tip and Base metal) $\times$ 100

(%)} was 13%, which was less than the range defined by the present invention. Therefore, the inertial force acting on the wire tip was insufficient, and a droplet was not able to be released. $\{T_{IB} / (T_{IP} + T_{IB})\}$ was 0.22, which was less than the range defined by the present invention. Therefore, a droplet formed at the wire tip was not completely released in the current suppression period $T_{IB}$, was likely to be released while receiving the arc reaction force in the current non-suppression period $T_{IP}$, short circuit also increased, spatter increased, and a stable penetration depth was not able to be obtained. As a result, the short circuit frequency was high, and the evaluation result was C.

In Test No. 16 as Comparative Example, {(Wave Height Wh / Distance between Tip and Base metal) $\times$ 100 (%)} was 40%, which was more than the range defined by the present invention. Therefore, even when the arc length was typical, short circuit increased. $\{T_{IB} / (T_{IP} + T_{IB})\}$ was 0.14, which was less than the range defined by the present invention. Therefore, a droplet formed at the wire tip was not completely released in the current suppression period $T_{IB}$, was likely to be released while receiving the arc reaction force in the current non-suppression period $T_{IP}$, short circuit also increased, spatter increased, and a stable penetration depth was not able to be obtained. As a result, the short circuit frequency was high, and the evaluation result was C.

In Test No. 17 as Comparative Example, $\{I_{P-AVE} / (I_{P-AVE} + I_{B-AVE})\}$ was 0.60, which was less than the range defined by the present invention. Therefore, the electromagnetic pinch force acting on a droplet was low. $\{T_N / (T_P + T_N)\} < \{T_{IB} / (T_{IP} + T_{IB})\}$ did not satisfy the condition defined by the present invention. Therefore, the arc force was insufficient at a timing at which the tip of the wire approached the molten pool before reverse feeding occurred, short circuit was likely to occur, and the penetration depth was shallow. As a result, the short circuit frequency was high, and the evaluation result was C.

In Test No. 18 as Comparative Example, $\{I_{P-AVE} / (I_{P-AVE} + I_{B-AVE})\}$ was 0.91, which was more than the range defined by the present invention. Therefore, the droplet size was large, a droplet was released in reaction to the arc reaction force, and arc stop and long-term short circuit occurred. As a result, the short circuit frequency was high, and the evaluation result was C.

In Test No. 19 as Comparative Example, $\{T_{IB} / (T_{IP} + T_{IB})\}$ was 0.29, which was less than the range defined by the present invention. Therefore, a droplet formed at the wire tip was not completely released in the current suppression period $T_{IB}$, was likely to be released while receiving the arc reaction force in the current non-suppression period $T_{IP}$, short circuit also increased, spatter increased, and a stable penetration depth was not able to be obtained. As a result, the short circuit frequency was high, and the evaluation result was C.

In Test No. 20 as Comparative Example, $\{T_{IB} / (T_{IP} + T_{IB})\}$ was 0.64, which was more than the range defined by the present invention. Therefore, the electromagnetic pinch force was insufficient, stable release was not able to be performed in the current suppression period $T_{IB}$, and a droplet was released at an unintentional timing such that short circuit occurred or spatter was generated. $\{T_N / (T_P + T_N)\} < \{T_{IB} / (T_{IP} + T_{IB})\}$ did not satisfy the condition defined by the present invention. Therefore, the arc force was insufficient at a timing at which the tip of the wire approached the molten pool before reverse feeding occurred, short circuit was likely to occur, and the penetration depth was shallow. As a result, the short circuit frequency was high, and the evaluation result was C.

In Test No. 21 as Comparative Example, $\{T_N / (T_P + T_N)\}$ was 0.35, which was less than the range defined by the present invention. Therefore, a sufficient time required for droplet release was not able be obtained, the electromagnetic pinch force was insufficient, stable release was not able to be performed in the current suppression period $T_{IB}$, and a droplet was released at an unintentional timing such that short circuit occurred or spatter was generated. $\{T_N / (T_P + T_N)\} < \{T_{IB} / (T_{IP} + T_{IB})\}$ did not satisfy the condition defined by the present invention. Therefore, the arc force was insufficient at a timing at which the tip of the wire approached the molten pool before reverse feeding occurred, short circuit was likely to occur, and the penetration depth was shallow. As a result, the short circuit frequency was high, and the evaluation result was C.

In Test No. 22 as Comparative Example, $\{T_N / (T_P + T_N)\}$ was 0.75, which was more than the range defined by the present invention. Therefore, a droplet formed at the wire tip was finely drawn, short circuit was likely to occur before the start of the reverse feeding period, and the penetration was shallow. As a result, the short circuit frequency was high, and the evaluation result was C.

In Test No. 23 as Comparative Example, $\{T_N / (T_P + T_N)\} < \{T_{IB} / (T_{IP} + T_{IB})\}$ did not satisfy the condition defined by the present invention. Therefore, the arc force was insufficient at a timing at which the tip of the wire approached the molten pool before reverse feeding occurred, short circuit was likely to occur, and the penetration depth was shallow. As a result, the short circuit frequency was high, and the evaluation result was C.

The present invention is not limited to the embodiment and Examples described above, and modifications, improvements, and the like can be appropriately made.

As described above, the present specification discloses the following features.

(1) A welding control method in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$, in which

a total period of the forward feeding period $T_P$ and the reverse feeding period $T_N$ is set as one cycle and a frequency f of one cycle is set as 50 to 150 Hz,

a relationship between an average current $I_{P-AVE}$ of the current non-suppression period $T_{IP}$ and an average current $I_{B-AVE}$ of the current suppression period $T_{IB}$ is set as $0.65 \leq I_{P-AVE} / (I_{P-AVE} + I_{B-AVE}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the current non-suppression period $T_{IP}$ is controlled to account for 2/3 or more of the forward feeding period $T_P$.

With such configuration, a stable penetration depth and a reduction in spatter can be simultaneously achieved in an arc welding method where forward feeding and reverse feeding of a tip of a wire are periodically repeated.

(2) The welding control method according to (1), in which

a feed speed of the welding wire when the tip of the welding wire is positioned at the uppermost end or the lowermost end is a predetermined value of an average feed speed.

With such configuration, even when the wire feed speed periodically changes, the melting speed of the wire and the feed speed of the wire are balanced such that the arc length is substantially constant and stable welding can be continued.

(3) The welding control method according to (1) or (2), in which

the current non-suppression period $T_{IP}$ consists of a rising period immediately after the current suppression period $T_{IB}$, a falling period immediately before the current suppression period $T_{IB}$, and a current control period $T_C$ other than the rising period and the falling period, and

the rising period is 20% or less with respect to the current non-suppression period $T_{IP}$ and the falling period is 20% or less with respect to the current non-suppression period $T_{IP}$.

With such configuration, the adjustment of the droplet size or the facilitation of droplet release can be implemented in the rising period $T_U$, and the adjustment of the droplet size before performing reverse feeding can be implemented in the falling period $T_D$.

(4) The welding control method according to (3), in which

at least two welding current set values $I_{P1}$ and $I_{P2}$ are provided in the current control period $T_C$, and when the uppermost end position of the welding wire is set as 0 deg as a reference,

a terminal end position of a range of the welding current set value $I_{P1}$ is set in a range of 20 deg or less, and a terminal end position of a range of the welding current set value $I_{P2}$ is set in a range of 135 to 220 deg.

With such configuration, by setting the terminal end position of the range of the first welding current set value $I_{P1}$ in the range of 20 deg or less, the swing of a droplet that starts to be formed can be suppressed, and more stable release can be maintained. By setting the terminal end position of the range of the second welding current set value $I_{P2}$ in the range of 135 to 220 deg, the arc pressure can act effectively on the molten pool, and a stable penetration depth can be obtained.

(5) The welding control method according to (4), in which

a terminal end of the range of the welding current set value $I_{P2}$ is set as a terminal end of the current control period $T_C$, and

when the terminal end position of the range of the welding current set value $I_{P2}$ is set as X deg,
a terminal end position of the current suppression period $T_{IB}$ is set in a range of (X + 100) to (X + 220) deg.

With such configuration, the current suppression period $T_{IB}$ includes a timing at which the maximum inertial force acts, which is preferable from the viewpoint of stabilizing the droplet release.
(6) The welding control method according to (4) or (5), in which

a set current of the welding current set value $I_{P1}$ is set as 250 to 600 A, and
a set current of the welding current set value $I_{P2}$ is set as 300 to 650 A.

With such configuration, the effect obtained by providing the first welding current set value $I_{P1}$ and the second welding current set value $I_{P2}$ can be further improved.
(7) The welding control method according to any one of (4) to (6), in which
external characteristics of a welding power supply are provided in the current control period $T_{C}$.
With such configuration, for example, even when the protrusion length during welding changes, the arc length can be controlled to be substantially constant by changing the welding current.
(8) The welding control method according to any one of (1) to (7), in which
an average volume of droplets released from the tip of the welding wire is 1.7 to 5.0 mm$^3$.
With such configuration, short circuit can be more effectively suppressed, and a reduction in spatter and a stable penetration depth can be effectively obtained.
(9) A welding control device in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$, in which
a total period of the forward feeding period $T_P$ and the reverse feeding period $T_N$ is set as one cycle and a frequency f of one cycle is set as 50 to 150 Hz,
a relationship between an average current $I_{P-AVE}$ of the current non-suppression period $T_{IP}$ and an average current $I_{B-AVE}$ of the current suppression period $T_{IB}$ is set as $0.65 \leq I_{P-AVE} / (I_{P-AVE} + I_{B-AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
a function of controlling the current non-suppression period $T_{IP}$ to account for 2/3 or more of the forward feeding period $T_P$ is provided.

With such configuration, a stable penetration depth and a reduction in spatter can be simultaneously achieved in an arc welding method where forward feeding and reverse feeding of a tip of a wire are periodically repeated.
(10) A welding power supply including: the welding control device according to (9).
With such configuration, a stable penetration depth and a reduction in spatter can be simultaneously achieved in an arc welding method where forward feeding and reverse feeding of a tip of a wire are periodically repeated.
(11) A welding system including the welding control device according to (9) or the welding power supply according to (10).
With such configuration, a stable penetration depth and a reduction in spatter can be simultaneously achieved in an arc welding method where forward feeding and reverse feeding of a tip of a wire are periodically repeated.
(12) A program causing a computer of a welding system to execute a function,

the welding system including at least a welding control device in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$,

the welding control device having a configuration in which

a total period of the forward feeding period $T_P$ and the reverse feeding period $T_N$ is set as one cycle and a frequency f of one cycle is set as 50 to 150 Hz,

a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the function is a function of controlling the current non-suppression period $T_{IP}$ to account for 2/3 or more of the forward feeding period $T_P$.

With such configuration, a stable penetration depth and a reduction in spatter can be simultaneously achieved in an arc welding method where forward feeding and reverse feeding of a tip of a wire are periodically repeated.

(13) A welding method including performing gas-shielded metal arc welding while performing a welding control in which, in the gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$, in which

a total period of the forward feeding period $T_P$ and the reverse feeding period $T_N$ is set as one cycle and a frequency f of one cycle is set as 50 to 150 Hz,

a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the current non-suppression period $T_{IP}$ is controlled to account for 2/3 or more of the forward feeding period $T_P$.

With such configuration, a stable penetration depth and a reduction in spatter can be simultaneously achieved in an arc welding method where forward feeding and reverse feeding of a tip of a wire are periodically repeated.

(14) An additive manufacturing method including performing additive manufacturing to which gas-shielded metal arc welding is applied while performing a welding control in which, in the gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$, in which
a total period of the forward feeding period $T_P$ and the reverse feeding period $T_N$ is set as one cycle and a frequency f of one cycle is set as 50 to 150 Hz,
a relationship between an average current $I_{P-AVE}$ of the current non-suppression period $T_{IP}$ and an average current $I_{B-AVE}$ of the current suppression period $T_{IB}$ is set as $0.65 \leq I_{P-AVE} / (I_{P-AVE} + I_{B-AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
the current non-suppression period $T_{IP}$ is controlled to account for 2/3 or more of the forward feeding period $T_P$.

With such configuration, a stable penetration depth and a reduction in spatter can be simultaneously achieved in an additive manufacturing method of an arc welding method where forward feeding and reverse feeding of a tip of a wire are periodically repeated.

Hereinabove, various embodiments have been described with reference to the drawings, but it is needless to say that the present invention is not limited to the examples. It is obvious to those skilled in the art that various modification examples or alteration examples can be conceived within the scope of the claims, and it is understood that such examples also fall within the technical scope of the present invention. Within a range not departing from the scope of the invention, the respective components of the above-described embodiment can be combined as appropriate.

The present application is based on Japanese Patent Application No. 2021-152554 filed on September 17, 2021, the content of which is incorporated herein by reference.

REFERENCE SIGNS LIST

50: welding system
100: welding wire
110: welding robot
111: welding torch
120: welding control device
140: welding power supply
150: controller
200: workpiece (base metal)
f: frequency
Fave: average feed speed
Fw: feed speed instruction signal (feed speed signal)
$I_{B-AVE}$: average current of current suppression period $T_{IB}$
$I_{P-AVE}$: average current of current non-suppression period $T_{IP}$
$I_{P1}$: first welding current set value
$I_{P2}$: second welding current set value
$T_C$: current control period

$T_D$: falling period
$T_{IB}$: current suppression period
$T_{IP}$: current non-suppression period
$T_N$: reverse feeding period
$T_P$: forward feeding period
$T_U$: rising period
Wh: wave height

## Claims

1. A welding control method in which, in gas-shielded metal arc welding where a welding current is supplied to a welding wire,

   while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
   based on at least a tip position of the welding wire or a feed speed signal of the welding wire,
   the welding current is controlled by being switched to a current non-suppression period $T_{IP}$ or a current suppression period $T_{IB}$, wherein
   a total period of the forward feeding period $T_P$ and the reverse feeding period $T_N$ is set as one cycle and a frequency f of one cycle is set as 50 to 150 Hz,
   a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,
   a wave height Wh that is a variation width of the tip position of the welding wire between the uppermost end and the lowermost end is set as 14 to 35% with respect to a distance between the tip of the welding wire and the base metal,
   a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
   a relationship between the forward feeding period $T_P$ and the reverse feeding period $T_N$ is set as $0.40 \leq T_N / (T_P + T_N) \leq 0.70$,
   a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
   the current non-suppression period $T_{IP}$ is controlled to account for 2/3 or more of the forward feeding period $T_P$.

2. The welding control method according to claim 1, wherein
   a feed speed of the welding wire when the tip of the welding wire is positioned at the uppermost end or the lowermost end is a predetermined value of an average feed speed.

3. The welding control method according to claim 1 or 2, wherein

   the current non-suppression period $T_{IP}$ consists of a rising period $T_U$ immediately after the current suppression period $T_{IB}$, a falling period $T_D$ immediately before the current suppression period $T_{IB}$, and a current control period $T_C$ other than the rising period $T_U$ and the falling period $T_D$, and
   the rising period $T_U$ is 20% or less with respect to the current non-suppression period $T_{IP}$ and the falling period $T_D$ is 20% or less with respect to the current non-suppression period $T_{IP}$.

4. The welding control method according to claim 3, wherein

   at least two welding current set values $I_{P1}$ and $I_{P2}$ are provided in the current control period $T_C$, and
   when the uppermost end position of the welding wire is set as 0 deg as a reference,
   a terminal end position of a range of the welding current set value $I_{P1}$ is set in a range of 20 deg or less, and
   a terminal end position of a range of the welding current set value $I_{P2}$ is set in a range of 135 to 220 deg.

5. The welding control method according to claim 4, wherein

a terminal end of the range of the welding current set value $I_{P2}$ is set as a terminal end of the current control period $T_C$, and
when the terminal end position of the range of the welding current set value $I_{P2}$ is set as X deg,
a terminal end position of the current suppression period $T_{IB}$ is set in a range of (X + 100) to (X + 220) deg.

6. The welding control method according to claim 4, wherein

a set current of the welding current set value $I_{P1}$ is set as 250 to 600 A, and
a set current of the welding current set value $I_{P2}$ is set as 300 to 650 A.

7. The welding control method according to claim 5, wherein

a set current of the welding current set value $I_{P1}$ is set as 250 to 600 A, and
a set current of the welding current set value $I_{P2}$ is set as 300 to 650 A.

8. The welding control method according to claim 4, wherein
external characteristics of a welding power supply are provided in the current control period $T_C$.

9. The welding control method according to claim 5, wherein
external characteristics of a welding power supply are provided in the current control period $T_C$.

10. The welding control method according to claim 6, wherein
external characteristics of a welding power supply are provided in the current control period $T_C$.

11. The welding control method according to claim 7, wherein
external characteristics of a welding power supply are provided in the current control period $T_C$.

12. The welding control method according to claim 1 or 2, wherein
an average volume of droplets released from the tip of the welding wire is 1.7 to 5.0 mm$^3$.

13. A welding control device in which, in gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$, wherein
a total period of the forward feeding period $T_P$ and the reverse feeding period $T_N$ is set as one cycle and a frequency f of one cycle is set as 50 to 150 Hz,
a relationship between an average current $I_{P-AVE}$ of the current non-suppression period $T_{IP}$ and an average current $I_{B-AVE}$ of the current suppression period $T_{IB}$ is set as $0.65 \leq I_{P-AVE} / (I_{P-AVE} + I_{B-AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
a function of controlling the current non-suppression period $T_{IP}$ to account for 2/3 or more of the forward feeding period $T_P$ is provided.

14. A welding power supply comprising the welding control device according to claim 13.

15. A welding system comprising the welding control device according to claim 13 or the welding power supply according to claim 14.

16. A program causing a computer of a welding system to execute a function,

the welding system including at least a welding control device in which, in gas-shielded metal arc welding where a welding current is supplied to a welding wire,
while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$,
the welding control device having a configuration in which
a total period of the forward feeding period $T_P$ and the reverse feeding period $T_N$ is set as one cycle and a frequency f of one cycle is set as 50 to 150 Hz,
a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
the function is a function of controlling the current non-suppression period $T_{IP}$ to account for 2/3 or more of the forward feeding period $T_P$.

17. A welding method comprising performing gas-shielded metal arc welding while performing a welding control in which, in the gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,
based on at least a tip position of the welding wire or a feed speed signal of the welding wire,
the welding current is controlled by being switched to a current non-suppression period $T_{IP}$ or a current suppression period $T_{IB}$, wherein
a total period of the forward feeding period $T_P$ and the reverse feeding period $T_N$ is set as one cycle and a frequency f of one cycle is set as 50 to 150 Hz,
a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,
a wave height Wh that is a variation width of the tip position of the welding wire between the uppermost end and the lowermost end is set as 14 to 35% with respect to a distance between the tip of the welding wire and the base metal,
a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,
a relationship between the forward feeding period $T_P$ and the reverse feeding period $T_N$ is set as $0.40 \leq T_N / (T_P + T_N) \leq 0.70$,
a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and
the current non-suppression period $T_{IP}$ is controlled to account for 2/3 or more of the forward feeding period $T_P$.

**18.** An additive manufacturing method comprising performing additive manufacturing to which gas-shielded metal arc welding is applied while performing a welding control in which, in the gas-shielded metal arc welding where a welding current is supplied to a welding wire,

while controlling a feed speed of the welding wire such that a tip of the welding wire is fed toward a base metal while periodically switching between a forward feeding period $T_P$ that is a period where the welding wire moves from an uppermost end as a position farthest from the base metal to a lowermost end as a position closest to the base metal and a reverse feeding period $T_N$ that is a period where the welding wire moves from the lowermost end to the uppermost end,

based on at least a tip position of the welding wire or a feed speed signal of the welding wire,

the welding current is controlled by being switched to a current non-suppression period $T_{IP}$ or a current suppression period $T_{IB}$, wherein

a total period of the forward feeding period $T_P$ and the reverse feeding period $T_N$ is set as one cycle and a frequency f of one cycle is set as 50 to 150 Hz,

a relationship between an average current $I_{P\text{-}AVE}$ of the current non-suppression period $T_{IP}$ and an average current $I_{B\text{-}AVE}$ of the current suppression period $T_{IB}$ is set as $0.65 \leq I_{P\text{-}AVE} / (I_{P\text{-}AVE} + I_{B\text{-}AVE}) \leq 0.90$,

a wave height Wh that is a variation width of the tip position of the welding wire between the uppermost end and the lowermost end is set as 14 to 35% with respect to a distance between the tip of the welding wire and the base metal,

a relationship between any current non-suppression period $T_{IP}$ and the current suppression period $T_{IB}$ immediately after the current non-suppression period $T_{IP}$ is set as $0.30 \leq T_{IB} / (T_{IP} + T_{IB}) \leq 0.60$,

a relationship between the forward feeding period $T_P$ and the reverse feeding period $T_N$ is set as $0.40 \leq T_N / (T_P + T_N) \leq 0.70$,

a relationship between the current non-suppression period $T_{IP}$, the current suppression period $T_{IB}$, the forward feeding period $T_P$, and the reverse feeding period $T_N$ is set as $\{T_N / (T_P + T_N)\} > \{T_{IB} / (T_{IP} + T_{IB})\}$, and

the current non-suppression period $T_{IP}$ is controlled to account for 2/3 or more of the forward feeding period $T_P$.

FIG. 1

WORKPIECE 200

111
100
110
120
150
140
50

FIG. 2

EP 4 382 236 A1

# FIG. 3

FORWARD FEEDING PERIOD T$_P$

REVERSE FEEDING PERIOD T$_N$

FORWARD FEEDING PERIOD T$_P$

REVERSE FEEDING PERIOD T$_N$

Tf

REVERSE FEEDING FIRST PERIOD

REVERSE FEEDING SECOND PERIOD

FORWARD FEEDING FIRST PERIOD

FORWARD FEEDING SECOND PERIOD

0     π/2     2π/2     3π/2     4π/2

WIRE FEED SPEED Fw

Fave ≒ WIRE MELTING SPEED Fm

Wf

EP 4 382 236 A1

*FIG. 4*

# FIG. 5

```
         ┌──────────────────────┐
    ┌───▶│      T = T0 ;        │─── S1
    │     └──────────────────────┘
    │                │                          ◀──────────────────┐
    │                ▼                                              │
    │              ╱ S2 ╲                                          │
    │            ╱        ╲        FALSE                           │
    │          ╱  T > = t1 ; ╲─────────────────┐                   │
    │            ╲        ╱                     │                   │
    │              ╲    ╱                       │                   │
    │                │ TRUE                     ▼                   │
    │                ▼          S4          ┌────────────┐ S3      │
    │     ┌──────▶┌──────────────┐          │  Ir = Ip ; │─────────┘
    │     │        │  Ir = Ib ;   │          └────────────┘
    │     │        └──────────────┘
    │     │                │
    │     │                ▼     S5
    │     │  FALSE      ╱      ╲
    │     └───────────╱ T > = t2 ; ╲
    │                  ╲         ╱
    │                    ╲     ╱
    │                      │ TRUE
    │                      ▼
    │     ┌──────▶┌──────────────┐
    │     │        │  Ir = Ip ;   │─── S6
    │     │        └──────────────┘
    │     │                │
    │     │                ▼     S7
    │     │  FALSE      ╱      ╲
    │     └───────────╱  T = T4 ;  ╲
    │                  ╲         ╱
    │                    ╲     ╱
    │                      │ TRUE
    └──────────────────────┘
```

# FIG. 6

REVERSE FEEDING PERIOD $T_N$

FORWARD FEEDING PERIOD $T_P$

T0  T1  T2  T3  T4 (T0)  T1

t1
t2

CURRENT DETECTION SIGNAL Io

t1'
t2'

$I_{P-AVE}$

$I_{B-AVE}$

CURRENT NON-SUPPRESSION PERIOD $T_{IP}$

CURRENT SUPPRESSION PERIOD $T_{IB}$

CURRENT NON-SUPPRESSION PERIOD $T_{IP}$

CURRENT SUPPRESSION PERIOD $T_{IB}$

CURRENT NON-SUPPRESSION PERIOD $T_{IP}$

EP 4 382 236 A1

# FIG. 7

CONTROL OF WELDING CURRENT
RELATING TO SHORT CIRCUITING
TRANSFER METHOD IN RELATED ART

FORWARD MOVEMENT START
CURRENT NON-SUPPRESSION PERIOD
0ms

FORWARD MOVEMENT
CURRENT NON-SUPPRESSION PERIOD
1.2ms

FORWARD MOVEMENT
CURRENT NON-SUPPRESSION PERIOD
2.4ms

FORWARD MOVEMENT
CURRENT SUPPRESSION PERIOD
3.6ms

SHORT CIRCUIT

FORWARD MOVEMENT
CURRENT SUPPRESSION PERIOD
4.8ms

FORWARD MOVEMENT
CURRENT SUPPRESSION PERIOD
6.0ms

FORWARD MOVEMENT
CURRENT SUPPRESSION PERIOD
7.2ms

FORWARD MOVEMENT
CURRENT SUPPRESSION PERIOD
8.4ms

SHORT CIRCUIT

SHORT CIRCUIT

REIGNITION

REVERSE MOVEMENT
CURRENT NON-SUPPRESSION PERIOD
9.6ms

REVERSE MOVEMENT
CURRENT NON-SUPPRESSION PERIOD
10.8ms

REVERSE MOVEMENT
CURRENT SUPPRESSION PERIOD
12.0ms

# FIG. 8

CONTROL OF WELDING CURRENT
ACCORDING TO PRESENT EMBODIMENT

| FORWARD MOVEMENT START — CURRENT NON-SUPPRESSION PERIOD | FORWARD MOVEMENT — CURRENT NON-SUPPRESSION PERIOD | FORWARD MOVEMENT — CURRENT NON-SUPPRESSION PERIOD | FORWARD MOVEMENT — CURRENT NON-SUPPRESSION PERIOD |
|---|---|---|---|
| 0ms | 1.2ms | 2.4ms | 3.6ms |

| FORWARD MOVEMENT — CURRENT NON-SUPPRESSION PERIOD | FORWARD MOVEMENT — CURRENT NON-SUPPRESSION PERIOD | FORWARD MOVEMENT — CURRENT NON-SUPPRESSION PERIOD | FORWARD MOVEMENT — CURRENT SUPPRESSION PERIOD |
|---|---|---|---|
| 4.8ms | 6.0ms | 7.2ms | 8.4ms |

| REVERSE MOVEMENT — CURRENT SUPPRESSION PERIOD | REVERSE MOVEMENT — CURRENT SUPPRESSION PERIOD | REVERSE MOVEMENT — CURRENT SUPPRESSION PERIOD |
|---|---|---|
| 9.6ms | 10.8ms | 12.0ms |

FIG. 9A

EP 4 382 236 A1

**FIG. 9B**

# FIG. 10

| SHORT CIRCUIT FREQUENCY | PENETRATION SHAPE |
|---|---|
| 97.7 times/s | |
| 9.6 times/s | |

## INTERNATIONAL SEARCH REPORT

International application No.

**PCT/JP2022/029717**

### A. CLASSIFICATION OF SUBJECT MATTER

*B23K 9/12*(2006.01)i; *B23K 9/09*(2006.01)i; *B23K 9/173*(2006.01)i
FI: B23K9/12 305; B23K9/09; B23K9/173 A

According to International Patent Classification (IPC) or to both national classification and IPC

### B. FIELDS SEARCHED

Minimum documentation searched (classification system followed by classification symbols)

B23K9/12; B23K9/09; B23K9/173

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/067074 A1 (KOBE STEEL LTD) 02 April 2020 (2020-04-02)<br>claims 1-17, fig. 1-10 | 1-18 |
| A | JP 2014-83553 A (PANASONIC CORP) 12 May 2014 (2014-05-12)<br>claims 1-8, fig. 1-11 | 1-18 |
| A | JP 60-180675 A (MITSUBISHI HEAVY IND LTD) 14 September 1985 (1985-09-14)<br>claim 1, fig. 3-4 | 1-18 |

☐ Further documents are listed in the continuation of Box C.　　☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/029717**

| Patent document cited in search report | | | Publication date (day/month/year) | Patent family member(s) | | | Publication date (day/month/year) |
|---|---|---|---|---|---|---|---|
| WO | 2020/067074 | A1 | 02 April 2020 | US | 2022/0032388 | A1 | |
| | | | | claims 1-18, fig. 1-10 | | | |
| | | | | EP | 3858530 | A1 | |
| | | | | KR | 10-2021-0039482 | A | |
| | | | | CN | 112770859 | A | |
| JP | 2014-83553 | A | 12 May 2014 | (Family: none) | | | |
| JP | 60-180675 | A | 14 September 1985 | (Family: none) | | | |

Form PCT/ISA/210 (patent family annex) (January 2015)

**REFERENCES CITED IN THE DESCRIPTION**

**Patent documents cited in the description**

- JP 2020049506 A
- JP 2021152554 A